(19) Europäisches Patentamt
European Patent Office
Office européen des brevets

(11) **EP 3 546 546 B1**

(12) **EUROPÄISCHE PATENTSCHRIFT**

(45) Veröffentlichungstag und Bekanntmachung des Hinweises auf die Patenterteilung:
**12.08.2020 Patentblatt 2020/33**

(21) Anmeldenummer: **17874196.3**

(22) Anmeldetag: **07.11.2017**

(51) Int Cl.:
**B29B 17/00** *(2006.01)*    **C10B 51/00** *(2006.01)*
**C10B 53/07** *(2006.01)*    **C08J 11/10** *(2006.01)*
**B01J 19/20** *(2006.01)*

(86) Internationale Anmeldenummer:
**PCT/RU2017/000832**

(87) Internationale Veröffentlichungsnummer:
**WO 2018/097757 (31.05.2018 Gazette 2018/22)**

(54) **VORRICHTUNG ZUR VERARBEITUNG VON ALTGUMMI**

DEVICE FOR PROCESSING SCRAP RUBBER

DISPOSITIF DE RECYCLAGE DE DÉCHETS À BASE DE CAOUTCHOUC

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.11.2016 RU 2016146652**

(43) Veröffentlichungstag der Anmeldung:
**02.10.2019 Patentblatt 2019/40**

(73) Patentinhaber: **Obschestvo S Ogranichennoi Otvetstvennostiu "Nauchno-Proizvodstvennoe Obedinenie Innovatekh"**
**St. Petersburg 199178 (RU)**

(72) Erfinder:
• **GRADOV, Aleksei Sergeevich**
**St. Petersburg 196603 (RU)**
• **SUSEKOV, Evgeny Sergeevich**
**St. Petersburg 195197 (RU)**
• **SUSEKOV, Sergei Pavlovich**
**G. Vsevolozhsk - Leningradskaya Obl. 188643 (RU)**

(74) Vertreter: **Jeck, Anton**
**Jeck & Fleck**
**Patentanwälte**
**Klingengasse 2**
**71665 Vaihingen/Enz (DE)**

(56) Entgegenhaltungen:
EP-B1- 1 201 389    RU-C1- 2 459 843
RU-C1- 2 459 843    RU-C2- 2 245 247
US-A- 5 057 189    US-A1- 2016 045 841

**Beschreibung**

Erfindungsebiet

Die Erfindung betrifft die Technologie der Abfallverwertung und kann in der Gummi- und chemischen Industrie, im Brennstoff- und Energie-Komplex sowie in der Wohn- und Kommunalwirtschaft eingesetzt werden, um solche Ressourcen, wie Brennstoffe und Rohstoffe, aus Abfällen zu gewinnen.

Stand der Technik

Bekannt sind ein Verfahren und eine Anlage zur Verwertung von gummihaltigen Abfällen (Patent RU2460743, IPC C08J11/20, veröffentlicht 10.09.2012). Diese bekannte Anlage zur Verwertung von gummihaltigen Abfällen umfasst einen Reaktor, einen Filter, einen Ofen sowie Wärmetausch- (Wärmeübertragungs-) und Separationsanlagen.
Der Reaktor besteht aus zwei Abschnitten (Blöcken), und zwar einem Abschnitt für die Thermolyse von Gummigranulat und einem Abschnitt für das Konditionieren von Industrieruß. Die beiden Abschnitte sind durch einen gemeinsamen Filter und einen innerhalb des Reaktors angeordneten Wendelförderer (ein Vortriebsmittel für feste Produkte) verbunden. Der Filter befindet sich zwischen den beiden Abschnitten. Als Vortriebsmittel wird eine rotierende Spirale verwendet. Die beiden Abschnitte können auch unabhängig voneinander benutzt werden. Dabei wird jeder Abschnitt jeweils mit einem Filter und einer Spirale versehen.
In der Anlage wird ein Filter aus rostfreiem Drahtgewebe (Drahtnetz) mit einer Kurzimpuls-Gasspülung eingesetzt. Dabei wird Gas durch Thermolyse gewonnen, indem es in einem Kompressor verdichtet wird, um das Kondensat des Wärmeübertragungsmediums (Kunstölkomponente) vom Gas zu trennen.
Die Mängel der genannten Anlage sind:

1. unvollständige Extraktion der flüssigen Fraktion (Öl) aus dem Gasstrom. Dadurch geht ein Teil hochwertiger flüssiger Produkte verloren. Dies ist dadurch bedingt, dass der sich bildende Industrieruß mit dem adsorbierten Öl mit Luft beblasen wird. Dabei wird der Textilkord vollständig verbrannt, und die Öle werden teilweise verbrannt und teilweise mit den Rauchgasen abgeführt.

2. niedrige Qualität (niedriger Reinheitsgrad) von Industrieruß aufgrund der Öl-Adsorption.
Um die Öle teilweise zu entfernen, wird der Industrieruß mit Luft beblasen. Infolgedessen oxidiert die Rußoberfläche, und die Qualität wird beeinträchtigt.

3. eine hohe Energieintensität des Verfahrens.
Dies ist durch die Notwendigkeit bedingt, ein umlaufendes Wärmeübertragungsmedium einzusetzen. Das umlaufende Wärmeübertragungsmedium muss von den Kohlenwasserstoff-Dämpfen getrennt werden, die infolge der thermischen Zersetzung von Gummi gebildet werden. Danach muss das umlaufende Wärmeübertragungsmedium im Wärmetauscher erwärmt, verdampft und im Ofen erhitzt werden, bevor es dem Reaktor zugeführt wird.

Bekannt ist ein Pyrolyseofen (Patent RU2441053, IPC F23G5/027, C10B 53/00, veröffentlicht 27.01.2012).
Dieser Pyrolyseofen umfasst einen Bunker, eine Schneckenpresse und eine Wärmekammer mit Pyrolysegas-Brennern. Innerhalb des Schnecken-Gehäuses, schräg in Bezug auf die Richtung der Rohstoffbewegung, befindet sich ein Strom-Zuteiler. Oberhalb der Schnecke sind die Pyrolyse-Schnecken mit Strom-Zuteilern angeordnet. Die Pyrolyse-Schnecken sind der Rohstoffbewegung entgegengesetzt. Die Anzahl der Pyrolyse-Schnecken beträgt in der Regel mehr als eine Einheit. Dabei wird jede Schnecke normalerweise von einem Getriebe-Motor angetrieben. Die oberen Schnecken weisen dabei die mit ihnen verbundenen Rohre zur Entfernung von Pyrolysegas auf. Pyrolysegas wird nützlich verwendet und zum Betreiben der Brenner der Wärmekammer eingesetzt. Die untere Schnecke dient der Rohstoffzufuhr und weist Öffnungen auf, durch die der Dampf in die Wärmekammer austreten kann. An den Seitenwänden und an der Decke der Wärmekammer sind Rohre des Wasserkessels zur nützlichen Verwendung der Wärme der Brenner angeordnet.
Zu den Mängeln dieses Ofens gehören:

1. unvollständige Extraktion der flüssigen Fraktion (Öl) aus dem Gasstrom.
Dadurch geht ein Teil von hochwertigen flüssigen Produkten verloren (werden in den Brennern der Wärmekammer verbrannt). Dabei erfolgen hohe Schadstoffemissionen, bedingt dadurch, dass in den Brennern der Wärmekammer eine vollständige Verbrennung von Pyrolysegasen mit hohem Teergehalt nicht realisiert werden kann.

2. niedrige Qualität von festen Pyrolyse-Produkten aufgrund von vorhandenen restlichen Kohlenwasserstoffen (flüchtigen Produkten).

Diese können während der Trocknung nicht abgeschieden werden. Deshalb bedürfen sie einer zusätzlichen thermischen Behandlung bei einer Hochtemperatur von ca. 800°C.

3. eine hohe Energieintensität des Verfahrens.

Dies ist durch verfahrenstechnische Wärmeverluste sowie die Notwendigkeit bedingt, die Temperatur im Ofen bis zu 800°C zu erhöhen.

Bekannt sind ferner ein Verfahren und eine Anlage zur Dampf-Wärme-Verwertung von Gummiabfällen (Patent BY13279, IPC C08J11/00, C10B53/07, veröffentlicht 2010.06.30).

Diese Anlage umfasst eine Erwärmungskammer, in der sich ein Reaktor befindet. Der Reaktor ist in Form von zwei gleichen Teilen ausgebildet, welche in einem Gehäuse untergebracht sind. Diese Teile sind in vertikaler Ebene übereinander angeordnet und werden nacheinander geschaltet, damit die Abfälle aus dem oberen in den unteren Teil geschüttet werden können. Die beiden Teile sind mit je einer Schnecke und je einem Dampfüberhitzer in Form einer über die Länge des Gehäuses gewundenen Rohrschlange (Rohrleitung) ausgestattet. Der Rohrleitungseinlauf ist an den Dampferzeuger angeschlossen. Der Rohrleitungsauslauf ist an das Gehäuse am Eintritt des oberen Reaktorteils angeschlossen. Die Erwärmungskammer ist von der Seite der Zuführung der Abfälle an den Auslass der Brennkammer für die Kraftstoffverbrennung angeschlossen. Der Auslass der Erwärmungskammer ist mit dem Dampferzeuger verbunden. Der obere Teil des Reaktors ist über einen Stutzen mit der Schnecke für die Zuführung der Abfälle verbunden. Die Schnecke ist mit einem Bunker mit einem Schleusenverschluss versehen. Die Erwärmungskammer ist mittels der Rohrleitung an drei nachgeschaltete Kondensatoren angeschlossen. Der Austritt für brennbares Gas aus dem dritten Kondensator ist an die Brennkammer für die Kraftstoffverbrennung angeschlossen. Der untere Teil des Reaktors ist über einen Stutzen mit einem Entladebunker verbunden, der eine als wassergefüllter Tauchverschluss ausgebildete Schleuse enthält. Der Entladebunker ist mit dem Einlass der Entladeschnecke verbunden. Der Auslass der Entladeschnecke ist an den Eintritt eines Trommeltrockners angeschlossen. Dabei ist der Trommeltrockner mit seinem Eintritt über eine Rohrleitung mit dem Auslass für die aus dem Dampferzeuger austretenden Verbrennungsprodukte verbunden. Der Austritt des Trommeltrockners ist der Entladeschnecke für feste Produkte und dem Filter für die Gasreinigung von Verbrennungsprodukten nachgeschaltet. Der Filter ist mit dem Schornstein verbunden.

Die Mängel dieser Vorrichtung sind:

1. unvollständige Extraktion der flüssigen Fraktion mittels Kondensatoren aus den gasförmigen Produkten der Pyrolyse von Altreifen.

Dadurch geht ein Teil von hochwertigen Komponenten der leichten Fraktion verloren (in der Brennkammer verbrannt). Auch wird die flüssige Fraktion mit Feinstaub verunreinigt, der infolge der Zerkleinerung von festen Produkten beim Betrieb von Förderschnecken entsteht und aus dem Reaktor in das Kondensationssystem mit dem Strom von gasförmigen Abbauprodukten (Spaltgasen) abgeführt wird.

2. niedrige Qualität fester Produkte der Pyrolyse von Altreifen wegen der vorhandenen rückständigen Kohlenwasserstoffe (flüchtigen Produkte).

Diese können während der Trocknung nicht abgeschieden werden. Deshalb bedürfen sie einer zusätzlichen thermischen Behandlung bei einer Hochtemperatur von ca. 600 bis 800°C.

3. eine hohe Energieintensität des Verfahrens.

Dies ist durch große verfahrenstechnische Wärmeverluste während der Pyrolyse von Altreifen im Reaktor sowie durch Wärmeverluste in den Kondensatoren (Wärme wird mit dem Kühlwasser abgegeben) bedingt.

Als nächstliegend in Bezug auf die vorliegende Erfindung werden das Verfahren zur Verwertung von Thermoplast-Abfällen und die Anlage zur Realisierung dieses Verfahrens angesehen (Patent RU2459843, IPC C08J11/04 (2006.01), veröffentlicht 27.08. 2012). Diese Erfindung wurde als Prototyp gewählt.

Diese Anlage zur Verwertung von Thermoplast-Abfällen umfasst eine Einheit für die Vorbehandlung der zu verwertenden Abfälle, eine Einheit zur thermischen Zersetzung der Produkte in einem Gas-Dampf-Gemisch und festen Rückstand und umfasst ferner ein Gas-Dampf-Gemisch-Fraktionierungssystem. Die Einheit für die thermische Zersetzung umfasst einen unter einem Erhebungswinkel geneigten Reaktor. Dieser Reaktor ist in einer Wärmekammer mit Brennern für gasförmigen Kraftstoff und einem Abgaszug für die Verbrennungsprodukte von gasförmigem Kraftstoff eingebaut. Der Reaktor ist mit Vorrichtungen für die Entleerung von festem Rückstand und die Abführung des Gas-Dampf-Gemisches ausgestattet. Dabei ist innerhalb des Reaktors eine Förderschnecke untergebracht. Das Schneckengetriebe ist außerhalb des Reaktors angeordnet. Die Vorrichtung zur Abführung des Gas-Dampf-Gemisches besteht aus einem mantelbeheizten Abgaszug. Der Abgaszug ist mit einer Absperrarmatur ausgestattet. Der Einlauf der Absperrarmatur ist mit dem Abgaszug für die Verbrennungsprodukte der Wärmekammer des Reaktors verbunden. Der Auslauf ist an die Mantelheizung der Aufgabevorrichtung (Einspeisevorrichtung) angeschlossen. Dabei ist die Vorrichtung für die Abführung des Gas-Dampf-Gemisches mit dem Gas-Dampf-Gemisch-Fraktionierungssystem verbunden. Dieses System enthält zwei nachgeschaltete luftgekühlte Kondensatoren mit Luftzufuhr-/Luftabfuhr-Stutzen und einen Fliehkraftabscheider (ein Zyklonfilter). Abgaskanäle des Fliehkraftabscheiders sind mit Brennern für gasförmigen Kraftstoff der Wärmekammer des Reaktors verbunden.

Zu den Mängeln dieser Vorrichtung gehören:

1. unvollständige Extraktion der flüssigen Fraktion aus den gasförmigen Produkten der Pyrolyse von Abfällen mittels des Fraktionierungssystems.

Dadurch geht ein Teil von hochwertigen Komponenten der leichten Fraktion verloren. Auch wird die flüssige Fraktion mit Feinstaub verunreinigt, der infolge der Zerkleinerung von festen Produkten beim Betrieb der Förderschnecken entsteht und aus dem Reaktor in das Kondensationssystem mit dem Strom von gasförmigen Abbauprodukten (Spaltgasen) abgeführt wird.

2. niedrige Qualität von festem Rückstand der Pyrolyse von Abfällen wegen der vorhandenen restlichen Kohlenwasserstoffe (flüchtigen Produkte).

Diese können während der Trocknung nicht abgeschieden werden. Deshalb bedürfen sie einer zusätzlichen thermischen Behandlung bei einer Hochtemperatur in einem Bereich von ca. 600 bis 800°C.

3. eine hohe Energieintensität des Verfahrens.

Dies ist durch große verfahrenstechnische Wärmeverluste während der Pyrolyse von Abfällen im Reaktor sowie durch Wärmeverluste in den Kondensatoren (Wärme wird mit dem Kühlwasser abgegeben) bedingt.

Offenbarung der Erfindung

Es ist die Aufgabe der vorliegenden Erfindung, die Qualität der aus den Gummi-Abfällen zu gewinnenden Produkte zu erhöhen sowie den Energieaufwand für das Verwertungsverfahren zu reduzieren.

Die gestellte Aufgabe wird dadurch gelöst, dass die Vorrichtung zur Verwertung von Gummi-Abfällen folgende Komponenten umfasst: einen Reaktor, eine Einheit für die thermische Zersetzung, Brenner, einen Kondensator, einen Fliehkraftabscheider (ein Zyklonfilter) sowie Vorrichtungen zur Entladung von festem Rückstand und zur Abführung des Gas-Dampf-Gemisches.

Der Reaktor ist mit einer Schnecke ausgestattet und befindet sich in einer Wärmekammer. Gemäß der Erfindung ist der Reaktor in Form von zwei gleichen Abschnitten (Blöcken) ausgeführt. Diese Abschnitte sind horizontal angeordnet und an ihren Seitenflächen miteinander parallel verbunden. Die Einheit für die thermische Zersetzung ist in Form von Schnecken ausgebildet, wobei jeweils entlang der Schneckenachse Heizrohre angeordnet sind. Die Schnecken sind im jeweiligen Abschnitt des Reaktors untergebracht. Der jeweiligen Schnecke entlang sind Platten angeordnet, wobei sich diese Platten parallel in den Ecken eines gleichseitigen Dreiecks in Kontakt mit der Seitenfläche des Heizrohrs und senkrecht dazu befinden. Innerhalb des jeweiligen Heizrohrs ist eine Rohrschlange eingebaut. An eine Stirnfläche des jeweiligen Rohrs ist unmittelbar eine zylinderförmige Brennkammer angeschlossen. Die Brennkammer ist mit einem Verdampfer und einem Brenner versehen. Der Brenner ist an der Stirnfläche tangential zu der Seitenfläche der Brennkammer und senkrecht zur Brennkammerachse angebracht. Der Austritt des Kondensators ist an einen Scheider (Separator) angeschlossen, welcher Kohlenwasserstoffe und Wasser in der flüssigen Fraktion trennt. Der Eintritt der jeweiligen Rohrschlange ist an den Verdampferaustritt angeschlossen. Der Verdampfereintritt ist an den Wasseraustritt des Scheiders angeschlossen. Der Austritt der jeweiligen Rohrschlange ist mit dem Reaktor verbunden. Die andere Stirnfläche des jeweiligen Heizrohrs ist an den Einlass der Wärmekammer angeschlossen. Die Vorrichtung für die Abführung des Gas-Dampf-Gemisches ist als zwei perforierte, am Eintritt verschlossene Rohre ausgeführt. Diese Rohre sind im oberen Teil des Reaktors eingebaut, je eins im jeweiligen Abschnitt des Reaktors. Der Fliehkraftabscheider hat eine Mantelheizung. Der Eintritt der Mantelheizung ist an den Auslass der Wärmekammer angeschlossen. Der Austritt der Mantelheizung ist an den Eingang des Heizkörpers angeschlossen. Der Ausgang des Heizkörpers ist mit dem Schornstein verbunden. Der Heizkammereingang des Heizkörpers ist mit der Umgebungsluft verbunden. Der Heizkammerausgang des Heizkörpers ist an das Heizrohr angeschlossen. Die Austritte der perforierten Rohre sind mit dem Eintritt eines Fliehkraftabscheiders verbunden. Der Fliehkraftabscheider weist ein Filterelement in Form eines Sacks aus Hochtemperatur-Kohlenstofffasergewebe (-Kohlefasergewebe) auf, das mit einer Rüttelvorrichtung versehen ist. Der Austritt des Fliehkraftabscheiders ist mit dem Eintritt eines Kondensators verbunden. Der Gasaustritt des Kondensators ist an die Heizrohre angeschlossen. Die Vorrichtung für die Entladung von festem Rückstand ist an den Eingang eines Magnetscheiders angeschlossen. Der Ausgang des Magnetscheiders ist mit einem elektrostatischen Scheider verbunden.

Die Ausführung des Reaktors in Form von zwei gleichen Abschnitten, die horizontal angeordnet und an ihren Seitenflächen miteinander parallel verbunden sind, stellt die Reduzierung der Wärmeverluste bei gleichzeitiger Erhöhung der Reaktorleistung sicher. Bei einer Ausführung des Reaktors in Form von zwei voneinander getrennten Abschnitten wären die Wärmeverluste noch höher als bei einer parallelen Verbindung der Abschnitte an ihren Seitenflächen. Durch die Reduzierung der Wärmeverluste wird auch der Energieaufwand für das Verwertungsverfahren niedriger.

Die Einheit für die thermische Zersetzung, ausgeführt in Form von Schnecken mit entlang der jeweiligen Schneckenachse angeordneten Heizrohren, wobei die Schnecken im jeweiligen Abschnitt des Reaktors angeordnet sind, sorgt für eine wirksame thermische Zersetzung von Dämpfen hochmolekularer Kohlenwasserstoffe in Komponenten mit einer niedrigeren Molekülmasse. Diese Dämpfe werden bei der Thermolyse der Gummiabfälle gebildet. Dabei wird für die thermische Zersetzung von Kohlenwasserstoffen thermische Energie aufgewendet, die den Dämpfen von Kohlenwasserstoffen zugeführt werden muss.

Im vorliegenden Fall ist der Wirkungsgrad der thermischen Zersetzung (Verkürzung der Zersetzungszeit) dadurch gewährleistet, dass die sich aus den Abfällen abscheidenden Dämpfe von Kohlenwasserstoffen von der Oberfläche der Abfälle aufwärts strömen und die bis zu einer hohen Temperatur erwärmten Rohre umströmen. Diese Rohre sind unmittelbar über der Oberfläche der Abfälle angeordnet. Infolge der Erwärmung der Dämpfe mittels der Wärmeübertragung von den Rohroberflächen durch Konvektion und durch Strahlung erfolgt zunächst die thermische Zersetzung hochmolekularer Kohlenwasserstoffe, die thermisch weniger stabil sind als niedermolekulare Kohlenwasserstoffe. Dabei bilden sich wertvollere (leichte) Kohlenwasserstoffe. Somit erhöht sich die Qualität von flüssigen Produkten der Thermolyse von Gummi-abfällen. Die thermische Zersetzung hochmolekularer Kohlenwasserstoffe führt zu einer wesentlichen Reduzierung des Gehalts an Kohlenwasserstoffen im Gas-Dampf-Gemisch. Das Gas-Dampf-Gemisch wird in das Kondensationssystem abgeleitet. Im entgegengesetzten Fall (bei einem erheblichen Gehalt an hochmolekularen Kohlenwasserstoffen im Gas-Dampf-Gemisch), wenn das Gemisch durch die Rohrleitungen strömt und in das Kondensationssystem einströmt, findet ein Verpichen (Kondensation aus dem Gas-Dampf-Gemisch) der Rohrwandungen und an der Wärmeaustauschfläche des Kondensators statt. Das Verpichen kommt während des ganzen Gemischdurchflusses zustande. Dieser Effekt führt zur Verstopfung der Rohrleitungen mit Teeren und zum Ausfall des Kondensators.

Während der thermischen Zersetzung der Dämpfe hochmolekularer Kohlenwasserstoffe bildet sich an den Rohrwandungen zwangsläufig eine Rußschicht. Die Rußschicht beeinträchtigt die Wärmeübertragung von den Rohren zu den Abfällen. Durch die Bildung der Rußschicht auf den Rohroberflächen entsteht ein wärmeisolierender Mantel. Infolge der Überhitzung brennen die Rohre durch, und der Reaktor fällt aus. In den Ecken eines gleichseitigen Dreiecks im Kontakt mit der Seitenfläche des jeweiligen Rohrs der Schnecke und senkrecht dazu sind Platten angeordnet, damit die Rußschicht von den Rohroberflächen der jeweiligen Schnecke entlang fortwährend entfernt werden kann. Bei der Schneckendrehung gleiten die Platten an den Rohrseitenflächen entlang und tragen den sich darauf bildenden Ruß ab. Dieser Ruß fällt dann unter dem Einfluss seines eigenen Gewichts auf die Oberfläche der Abfälle ab, die mit den Schnecken befördert werden. Der sich aus den Dämpfen von Kohlenwasserstoffen bildende Ruß enthält praktisch keine aschehaltigen Einschlüsse in Form von Mineralkomponenten. Dies ist darauf zurückzuführen, dass die Dämpfe von Kohlenwasserstoffen keine mineralischen Verunreinigungen, wie Silicium-, Eisen- und Zinkoxide usw., enthalten. Bei der Vermengung dieses Rußes mit dem festen Rückstand sinkt der Gehalt an mineralischen Verunreinigungen im Gemisch. Dadurch verbessert sich die Qualität von festen Produkten der Thermolyse von Gummiabfällen. Dabei verringert sich nämlich der Aschegehalt, und die spezifische Oberfläche vergrößert sich. Die innerhalb des jeweiligen Rohrs eingebaute Rohrschlange ermöglicht es, die Rohr-Oberflächentemperatur und somit die Geschwindigkeit und die Menge des sich auf der Rohroberfläche bildenden Rußes zu regeln. Diese Regelung erfolgt durch die Änderung der Wasserdampf-Durchflussmenge, die durch die Rohrschlange gepumpt wird. Gleichzeitig wird dabei der Wasserdampf bis zu einer vorgegebenen Temperatur übererwärmt und als Arbeits-Wasserdampf dem Reaktor durch die Rohrschlange zugeführt.

Für die Realisierung des Verfahrens zur Verwertung von Abfällen muss dem Reaktor thermische Energie zugeführt werden. Durch den Anschluss der zylinderförmigen Brennkammer an die Stirnfläche des jeweiligen Rohrs der Schnecke kann die thermische Energie unmittelbar durch das Rohr dem Reaktor zugeleitet werden.

Um eine vollständige Kraftstoff-Verbrennung sicherzustellen, ist die Brennkammer mit einem Brenner versehen. Der Brenner ist an der Stirnfläche tangential zur Seitenfläche der Brennkammer und senkrecht zur Brennkammerachse angebracht. Auf diese Weise kann in der Brennkammer eine turbulente Verbrennung erzeugt werden. Bei dieser turbulenten Verbrennung wird der Kraftstoff vollständig verbrannt. Aufgrund dessen wird der Energieaufwand für das Verwertungsverfahren niedriger. Die Verbrennungsprodukte aus der Brennkammer strömen durch das Rohr eine Zeit lang. Danach erfolgen die vollständige Kraftstoff-Nachverbrennung sowie der Abbau von Schadstoffen.

Der in der Brennkammer vorhandene Verdampfer ermöglicht es, Arbeits-Wasserdampf zu erzeugen, ohne dass ein spezieller Dampferzeuger eingesetzt werden muss. Außerdem können die Brennkammerwände gekühlt werden, damit sie nicht durchbrennen. Auch die Wärmeverluste an die Umgebung werden reduziert. Dies ist möglich, da die Wärme über die Seitenwände der Brennkammer zum Verdampfer übertragen und nicht an die Umgebung abgegeben wird. Das bedeutet, dass der Verdampfer als effektive Wärmedämmung (Wärmeisolierung) der Brennkammer dient. (Effektiv ist es, weil die Wärme zur Erzeugung des Arbeits-Wasserdampfes nützlich verwendet wird). Dies führt zur Reduzierung des Energieaufwands für das Verwertungsverfahren.

Für die Erzeugung des Arbeits-Wasserdampfes muss dem Verdampfer ständig Wasser zugeführt werden. Deswegen ist der Verdampfereintritt an den Wasseraustritt des Scheiders angeschlossen. Im Scheider werden in den flüssigen Produkten flüssige Kohlenwasserstoffe vom Wasser getrennt. Das im Scheider getrennte Wasser bildet sich im Kondensator infolge der Kondensation des Arbeits-Wasserdampfes und enthält keine Salze. Dieses Wasser wird im geschlossenen Kreislauf verwendet. Dadurch kann der Wasserverbrauch aus anderen Quellen wesentlich reduziert werden. Außerdem kann der Wasserverbrauch für das Verfahren zur Verwertung von Abfällen gesenkt werden.

Durch das Anschließen des Eintritts der jeweiligen Rohrschlange an den Verdampferaustritt wird die Wasserdampfzufuhr der Rohrschlange sichergestellt. Außerdem kann der Dampf die Rohrschlange unter Überdruck durchströmen. Der Überdruck wird im Verdampfer infolge der Erwärmung erzeugt.

Der Austritt der jeweiligen Rohrschlange ist mit dem Reaktor verbunden, um den Wasserdampf dem Reaktor zuzuführen.

Wichtig ist, dass der austretende überhitze Wasserdampf aus der Rohrschlange die Rohroberflächen der Schnecken umströmt und mit dem sich auf der Oberfläche bildenden Ruß in Kontakt ist. Da der Ruß auf der Oberfläche die Temperatur von ca. 700 bis 800°C hat, führt der Kontakt von Ruß mit Wasserdampf zu einer Wasserdampf-Abbaureaktion, wobei sich Wasserstoff und Kohlenstoffoxid bilden. Der gebildete Wasserstoff vermischt sich bei einer hohen Temperatur im Reaktor mit den Dämpfen von Kohlenwasserstoffen. Infolgedessen verlaufen Hydrierreaktionen, d. h. der Gehalt an ungesättigten Verbindungen im Gas-Dampf-Gemisch verringert sich. Dies trägt zur verbesserten Qualität der gebildeten flüssigen Kohlenwasserstoffe bei.

Die durch die Rohre der Schnecke strömenden Kraftstoff-Verbrennungsprodukte fließen aus den Rohren bei einer hohen Temperatur (nicht niedriger als die Temperatur im Reaktor, d. h. ca. 500 bis 600°C) heraus. Um die Energieeffizienz der Anlage zu erhöhen und den Wärmeaufwand für das Verwertungsverfahren zu reduzieren, werden diese Produkte deshalb nicht an die Umgebungsluft, sondern in die Wärmekammer geleitet. Dies wird dadurch ermöglicht, dass die Stirnfläche (der Auslauf) des jeweiligen Schneckenrohrs an die Wärmekammer angeschlossen ist.

Durch die Ausführung der Vorrichtungen für die Abführung des Gas-Dampf-Gemisches in Form von zwei perforierten, am Eintritt verschlossenen Rohren, die im oberen Teil des Reaktors eingebaut sind, je eins im jeweiligen Abschnitt des Reaktors, sowie durch die Verbindung dieser Rohre mit dem Eintritt des Fliehkraft-abscheiders, der ein Filterelement in Form eines Sacks aus dem Hochtemperatur-Kohlenstofffasergewebe mit einer Rüttelvorrichtung aufweist, werden die Ableitung der Dampfgasprodukte aus dem Reaktor und die Reinigung dieser Produkte von feindispersen Rußteilchen sichergestellt. Diese Rußteilchen bilden sich bei der Schneckendrehung und der Zerkleinerung von festem Rückstand sowie beim Abtragen der Rußschicht von den Rohroberflächen. Dabei können die gröberen Partikel von festem Rußrückstand durch die Löcher der perforierten Rohre nicht durchgehen. Die Perforierung der Rohroberflächen ermöglicht es, den Gesamtquerschnitt zu vergrößern, der für die Ableitung des Gas-Dampf-Gemisches aus dem Reaktor dient. Außerdem kann dadurch die Gasstrom-Geschwindigkeit auf den Rohroberflächen verringert werden, d. h. die Menge der aus dem Reaktor vertriebenen Feststoffteilchen kann reduziert werden.

Da das Gas-Dampf-Gemisch eine hohe Temperatur (400 bis 500°C) aufweist, ist im Fliehkraftabscheider als Filterelement ein Sack aus Hochtemperatur-Kohlenstofffasergewebe angeordnet. Durch die Filtration des Gas-Dampf-Gemisches bei einer hohen Temperatur werden das Kondensat-Absetzen der Dämpfe von Kohlenwasserstoffen am Filterelement und das Verstopfen des Filterelements ausgeschlossen. Da infolge des Teilchen-Absetzens auf der Oberfläche des Hochtemperatur-Kohlenstofffasergewebes ein Widerstand dem durch den Fliehkraftabscheider fließenden Gas-Dampf-Gemischstrom erzeugt wird, wird das Filterelement regelmäßig (ein- bis dreimal pro Minute) mit Hilfe der Rüttelvorrichtung geschüttelt. Der Ruß wird in den Filterspeicher abgeworfen.

Durch die Ausstattung des Fliehkraftabscheiders mit einer Mantelheizung, deren Eintritt an den Auslass der Wärmekammer des Reaktors angeschlossen ist, kann eine hohe Temperatur des Fliehkraftabscheiders (höher als die Kondensationstemperatur der Dämpfe von Kohlenwasserstoffen) aufrechterhalten werden. Dadurch können die Kondensation der Dämpfe unmittelbar im Fliehkraftabscheider und das Kondensat-Absetzen der Dämpfe von Kohlenwasserstoffen an der Oberfläche des Kohlenstofffasergewebes ausgeschlossen werden.

Die aus der Mantelheizung austretenden Verbrennungsprodukte haben eine hohe Temperatur. Deshalb ist der Austritt der Mantelheizung des Fliehkraftabscheiders an den Eingang des Heizkörpers angeschlossen. Dadurch lassen sich die Verbrennungsprodukte bis zu einer Temperatur im Bereich von 200 bis 250°C abkühlen. Danach können sie in den Schornstein geleitet werden. Dabei wird die Luft mit der Abkühlwärme der Verbrennungsprodukte erwärmt. Diese Luft wird mittels eines Ventilators über die Heizkammer des Heizkörpers gepumpt und den Heizrohren zugeführt. Die Zuführung der bis zu einer Temperatur von 150 bis 250°C erwärmten Luft zu den Heizrohren für die Verbrennung der nicht kondensierenden Dämpfe von Kohlenwasserstoffen ermöglicht es, Wärme nützlich zu verwenden. Außerdem führt dies zur Reduzierung des Energieaufwands für das Gummiabfälle-Verwertungsverfahren. Auch steigt dabei die Verbrennungstemperatur in den Heizrohren. Dabei kommt es zu einer Reduzierung der Emissionen von persistenten organischen Schadstoffen.

Durch das Anschließen des Fliehkraftabscheideraustritts an den Eintritt des Kondensators kann das Gas-Dampf-Gemisch dem Kondensator zugeführt werden. Das Gas-Dampf-Gemisch ist von Feststoffteilchen gereinigt.

Im Kondensator wird das Gas-Dampf-Gemisch gekühlt, und Wasserdämpfe sowie Dämpfe von Kohlenwasserstoffen werden verflüssigt (kondensiert). Im Kondensator wird ein Teil der Dämpfe von Kohlenwasserstoffen, welche einen niedrigen Siedepunkt (unter 100°C) haben, nicht verflüssigt. Um die Emission der nicht kondensierenden Dämpfe von Kohlenwasserstoffen auszuschließen, ist der Gasaustritt des Kondensators an die Heizrohre angeschlossen. Somit werden die nicht kondensierenden Dämpfe von Kohlenwasserstoffen den Heizrohren zugeführt und verbrannt. Dies ermöglicht es, die Dampfenergie nützlich zu verwenden und den Verbrauch von flüssigem Kraftstoff für das Verwertungsverfahren zu senken.

Der sich bei der Verwertung von Gummiabfällen bildende feste Rückstand hat einen hohen Aschegehalt. (Dieser beträgt ca. 12 bis 14 Gew.-%, abhängig vom Typ der Gummiabfälle). Aus diesem Grund kann dieser feste Rückstand für die Herstellung von hochbeanspruchten Gummiartikeln nicht eingesetzt werden. Deshalb ist die Vorrichtung für die Entladung von festem Rückstand an einen Magnetscheider und einen elektrostatischen Koronascheider angeschlossen. Im elektrostatischen Koronascheider wird im festen Rückstand Asche abgetrennt. Dadurch verbessert sich die Qualität von festem Rückstand. Die abgeschiedene Asche enthält einen großen Gehalt an Zinkoxid. Je nach Art des Gummis kann der genannte Gehalt 30 bis 40% betragen. Dies ist wesentlich mehr in Bezug auf den Zinkoxid-Gehalt in Konzentraten, die für die Gewinnung von Zinkoxid verwendet werden. Deshalb stellt Asche einen wertvollen Rohstoff zur Gewinnung von Zinkoxid dar.

Somit ermöglicht es das Anschließen des elektrostatischen Koronascheiders, nicht nur die Wertzahl von festen Produkten der Verwertung von Gummiabfällen zu verbessern, sondern auch wertvollen Rohstoff für die Herstellung von Zinkoxid zu gewinnen.

Kurzbeschreibung der Zeichnungen

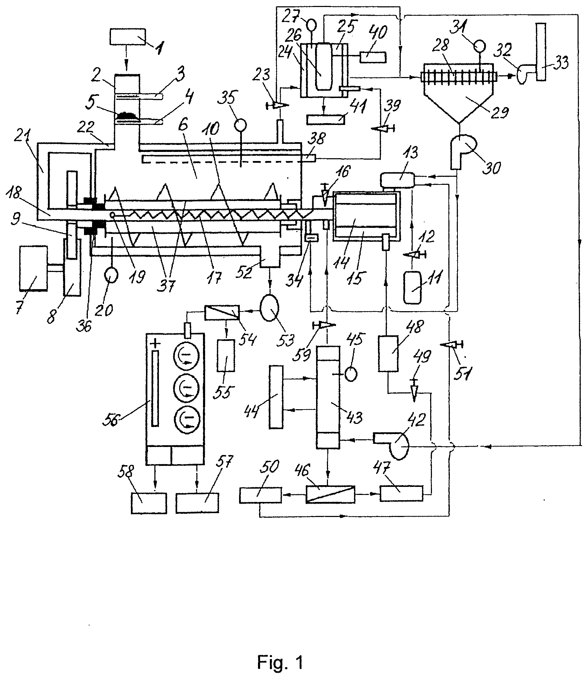

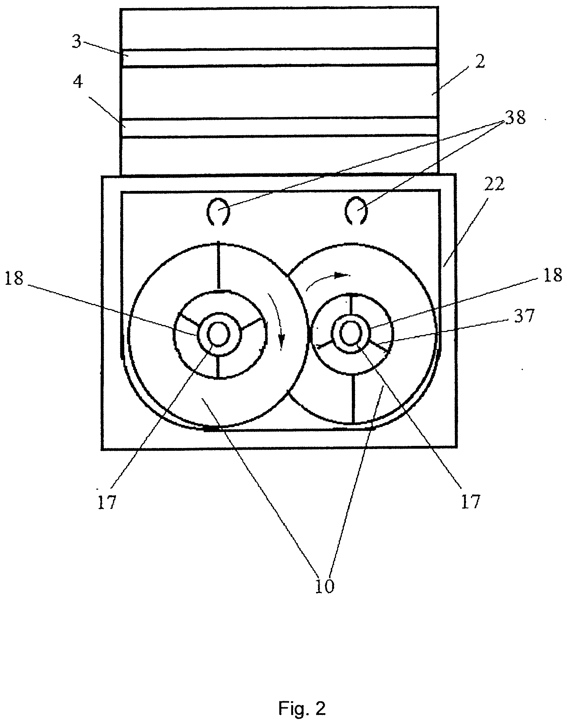

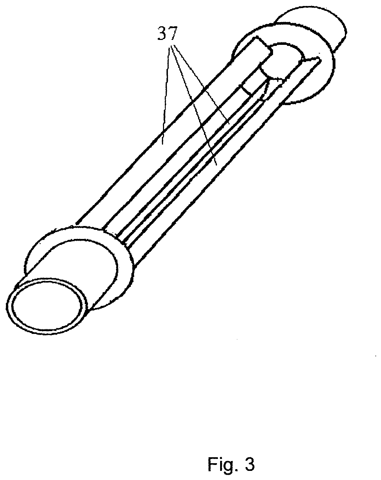

Die Figuren 1, 2 und 3 zeigen eine Gesamtansicht und die Teile der Vorrichtung zur Verwertung von Gummiabfällen.

Die Vorrichtung umfasst:

einen Speicher 1, der an einen Bunker 2 mit Verschlüssen 3 und 4 für die Zufuhr von Abfällen 5 angeschlossen ist; einen Reaktor 6; einen Motor 7, der mit einem Zahnrad 8 verbunden ist, das mit einem Zahnrad 9 verbunden ist; Förderschnecken 10; einen Behälter 11, der mit einem Regulierhahn 12 verbunden ist; Brenner 13; zylinderförmige Brennkammern 14 mit Verdampfern 15; Hähne 16, die mit Rohrschlangen 17 verbunden sind, die in Heizrohren 18 eingebaut sind; Dampfaustritte 19; Temperatursensoren 20; eine Rohrleitung 21; eine Mantelheizung des Reaktors 22; einen Hahn 23; einen Filtermantel 24; einen Fliehkraftabscheider 25 mit einem Filterelement 26; einen Temperatursensor 27; einen Heizkörper 28 mit einer Heizkammer 29; einen Ventilator 30; einen Temperatursensor 31; einen Saugzug 32, der mit einem Schornstein 33 verbunden ist; einen Zugschieber 34; einen Temperatursensor 35; eine Hochtemperaturpackung 36; Kratzer 37; perforierte Rohre 38; einen Hahn 39; eine Rüttelvorrichtung 40; einen Speicher 41; einen Kompressor 42; einen Kondensator 43; einen Kühlturm 44; einen Temperatursensor 45; einen Scheider (Separator) 46; einen Speicher 47; einen Wasserfilter 48; einen Hahn 49; einen Speicher 50; einen Hahn 51; einen Kohlenstoffrückstand-Austritt 52; eine Kühl- und Dosiervorrichtung 53; einen Magnetscheider 54; einen Speicher 55; einen elektrostatischen Scheider 56; Speicher 57 und 58; einen Hahn 59.

Gemäß der Erfindung funktioniert die Vorrichtung in folgender Weise:
Aus dem Speicher 1 werden dem Bunker 2 bei geschlossenen Verschlüssen 3 und 4 zerkleinerte Gummiabfälle 5 in Form von Chips zugeführt. Nachdem der Bunker 2 gefüllt ist, wird der Verschluss 3 geöffnet. Die Abfälle aus dem Bunker 2 werden nach unten ausgeschüttet und bleiben auf dem Verschluss 4 liegen. Danach wird der Verschluss 3 geschlossen und der Verschluss 4 geöffnet. Die Abfälle werden in den Reaktor 6 eingeschüttet. Danach wird der Verschluss 4 geschlossen. Gleichzeitig wird das Zahnrad 8 mit dem Motor 7 in Drehung versetzt. Das Zahnrad 8 kommt mit dem Zahnrad 9 in Eingriff. Das Zahnrad 9 ist mit der ersten Schnecke 10 verbunden und kommt mit dem Zahnrad der zweiten Schnecke in Eingriff. Dank solch einem Anschluss der Zahnräder werden die Schnecken bei dem drehenden Zahnrad 8 gegenläufig zueinander gedreht. Die Abfälle werden dabei von der Beschickung zur Entladung transportiert. Mittels der gegenläufig zueinander drehenden Schnecken werden die Abfälle intensiv gemischt und gefördert. Dadurch wird die Wärmeübertragung zu den Abfällen intensiviert.

Die Förderzeit der Abfälle im Reaktor wird durch die Änderung der Drehzahl des Motors 7 geregelt. Gleichzeitig mit dem Beginn der Beförderung der Abfälle aus dem Behälter 11 über die Regulierhähne 12 in die Brenner 13 (in Fig. 1 ist nur ein Brenner gezeigt) wird der Kraftstoff zugeführt und verbrannt. Die Brenner 13 sind in den zylinderförmigen Brennkammern 14 eingebaut. Bei der Kraftstoffverbrennung erfolgt eine Wirbelbildung der Verbrennungsprodukte mit einer hohen Temperatur. Dabei wird der Kraftstoff vollständig verbrannt. Die Bildung von schädlichen Verbindungen (Benzo[a]pyren u. a.) in den Verbrennungsprodukten wird reduziert. Gleichzeitig wird dabei der Wärmeaustausch zwischen den Verbrennungsprodukten und dem Verdampfer 15 intensiviert. Dies ermöglicht es, bei nicht großen Ausmaßen des Verdampfers eine ausreichende Arbeits-Wasserdampfmenge zu erzeugen. Der Wasserdampf aus den Verdampfern 15 wird bei einer Temperatur von 100 bis 110°C über die Hähne 16 mit einem vorgegebenen Dampfverbrauch den Rohrschlangen 17 zugeführt. Die Rohrschlangen 17 sind in den Heizrohren 18 angeordnet.

Aus den zylinderförmigen Brennkammern 14 strömen die Kraftstoff-Verbrennungsprodukte in die Heizrohre 18 ein. Die Kraftstoff-Verbrennungsprodukte fließen durch die Heizrohre 18 und erwärmen den Reaktor. Außerdem wird dabei der durch die Rohrschlangen 17 strömende Wasserdampf erwärmt. Der Wasserdampfverbrauch über die Rohrschlangen 17 wird mit den Hähnen 16 geregelt. Dadurch wird die Dampftemperatur an den Dampfaustritten 19 in einem Bereich von 450 bis 500°C aufrechterhalten. Der Wasserdampf strömt aus der jeweiligen Rohrschlange 17 durch den Dampfaustritt 19 heraus. Die Wasserdampftemperatur wird dabei mit Hilfe von Temperatursensoren 20 kontrolliert.

Da die Rohrschlangen 17 unmittelbar in den Heizrohren 18 eingebaut sind, wird der Strom von Verbrennungsprodukten verwirbelt. (Es stellt sich eine turbulente Strömungsform der Verbrennungsprodukte ein.) Dadurch wird die Wärmeabgabe vom Strom zu den Rohrschlangen 17 selbst sowie den Heizrohrwandungen 18 erheblich erhöht. Im Folgenden wird der Wärmestrom in den Reaktor 6 durch Konvektion und Strahlung vergrößert (verstärkt).

Aus den Heizrohren 18 strömen die Verbrennungsprodukte durch die Rohrleitung 21 in die Mantelheizung 22. Die Rohrleitung 21 verbindet die beiden Heizrohre. Bei dem Durchgang der Verbrennungsprodukte durch die Mantelheizung 22 wird der Reaktor zusätzlich erwärmt.

Die Verbrennungsprodukte werden über den Hahn 23 in den Filtermantel 24 des Fliehkraftabscheiders 25 geleitet. Dies ist nötig, um die Temperatur des Fliehkraft-abscheiders höher als die Kondensationstemperatur der Dämpfe von Kohlenwasserstoffen aufrechtzuerhalten, die sich bei der Thermolyse der Gummi-abfälle bilden. Im entgegengesetzten Fall wird ein Teil der Dämpfe von Kohlenwasserstoffen bei einer Temperaturabnahme im Fliehkraftabscheider 25 verflüssigt (kondensiert) und am Filterelement 26 abgesetzt. Das Filterelement wird in diesem Fall ausfallen.

Die Temperatur im Fliehkraftabscheider 25 wird nach den Angaben des Temperatursensors 27 kontrolliert und in einem Bereich von 350 bis 400°C aufrechterhalten, indem der Verbrauch der Verbrennungsprodukte anhand des Hahns 23 geregelt wird. Die den Filtermantel 24 des Fliehkraftabscheiders 25 durchströmten Verbrennungsprodukte werden dem Heizkörper 28 zugeführt. Dort werden sie bis auf eine Temperatur von 200 bis 250°C gekühlt, indem Luft durch die Heizkammer 29 mit einem Ventilator 30 geblasen wird. Die Abkühltemperatur der Verbrennungsprodukte wird dabei anhand von Angaben des Temperatursensors 31 kontrolliert.

Die gekühlten Verbrennungsprodukte werden aus dem Heizkörper 28 mittels des Saugzugs 32 in den Schornstein 33 abgeleitet. Die im Heizkörper erhitzte Luft wird mit dem Ventilator 30 über die Zugschieber 34 in gleicher Menge den Heizrohren 18 zugeführt.

Dies ermöglicht es, die Wärme der Verbrennungsprodukte nützlich zu verwenden, wobei die Verbrennungsprodukte aus dem Filtermantel 24 bei einer hohen Temperatur (350 bis 400°C) austreten. Dabei wird der Kraftstoffverbrauch durch eine vollständige Ausnutzung der Wärme von den Verbrennungsprodukten reduziert und die Emission thermischer Energie mit den Verbrennungsprodukten vermieden. D. h., die Energieeffizienz des Verfahrens zur Verwertung von Altreifen wird erhöht.

Unmittelbar in den Reaktor 6 wird mit dem überhitzen Wasserdampf im Bereich der Beschickung mit Ausgangs-Gummiabfällen Wärme eingeführt. Die Ausgangsabfälle haben eine Temperatur, die annähernd gleich der Umgebungstemperatur ist. (Die dem Reaktor zugeführten Abfälle sind noch nicht durchgewärmt.)

Die Zuführung des überhitzen Wasserdampfes zu diesem Bereich des Reaktors stellt eine große Temperaturdifferenz zwischen dem bis zu 500°C überhitzten Wasserdampf und den kalten Abfällen mit einer Temperatur von ca. 30 bis 40°C sicher. Durch diese große Temperaturdifferenz lassen sich hohe Wärmeströme des Wasserdampfs zu den Abfällen mittels einer Konvektionsübertragung thermischer Energie bilden. Infolgedessen wird die Erwärmung der Abfälle beschleunigt und die Verwertungszeit reduziert.

Die Gummiabfälle werden in den Reaktor 6 gefördert und durch den Kontakt mit den heißen Reaktorwänden erwärmt. Außerdem erfolgt die genannte Erwärmung durch den Konvektionswärmeaustausch mit dem Wasserdampf, der dem Reaktor zugeführt wird, oder auch durch Strahlung von den Heizrohren und den Konvektionswärmeaustausch mit den Heizrohroberflächen.

Die Anordnung der Heizrohre jeweils entlang der Schneckenachse ermöglicht es, die Heizrohre näher an die Oberfläche der Gummiabfälle zu bringen. Dadurch wird die Wärmeübertragung verbessert, und zwar nicht nur durch Strahlung, sondern auch durch Konvektion. Der sich im Reaktor befindende Wasserdampf sowie die Dämpfe von Kohlenwasserstoffen absorbieren die Wärmestrahlung. Aus diesem Grund muss für die Reduzierung dieser Absorption der Abstand von den Heizrohren zu der Oberfläche der Gummiabfälle verringert werden. Bei einem größeren Abstand von den Heizrohren zur Oberfläche der Gummiabfälle wird ein erheblicher Teil (abhängig vom Abstand, den die Wärmestrahlung passiert) der Wärmestrahlung vom Gas-Dampf-Gemisch (d. h. vom Gemisch aus Wasserdampf und Dämpfen von Kohlenwasserstoffen) absorbiert. Deshalb wird der Wärmestrom unmittelbar zu den Abfällen verringert. Dies verursacht die Verlängerung der Zeit der Zersetzung von Abfällen und somit die Reduzierung der Leistung und die Erhöhung des Energieaufwands für das Verwertungsverfahren.

Bei der Erwärmung der Gummiabfälle im Reaktor 6 bis zu einer Temperatur von 300 bis 400°C beginnt die Thermolyse der Gummiabfälle und verläuft mit der Freisetzung von gasförmigen Produkten und festem Kohlenstoffrückstand. Die Temperatur im Reaktor 6 wird dabei nach den Angaben des Temperatursensors 35 kontrolliert und durch Änderung der Kraftstoffmenge geregelt, die in den Brennern 13 verbrannt wird. Gasförmige Zersetzungsprodukte der Abfälle vermischen sich mit dem Wasserdampf. Infolgedessen bildet sich im Reaktor 6 ein Gas-Dampf-Gemisch. Der Druck im Reaktor steigt und wird größer als der Atmosphärendruck. Um dabei den Austritt von Gas-Dampf-Produkten aus dem Reaktor 6 an die Umgebung(sluft) auszuschließen und die Drehung der Schnecken 10 sicherzustellen, sind im jeweiligen Abschnitt des Reaktors die Hochtemperaturpackungen 36 angeordnet.

Die Gas-Dampf-Produkte, die durch die Thermolyse der Gummiabfälle gebildet wurden, sind im Kontakt mit den Heizrohroberflächen mit einer hohen Temperatur (700 bis 800°C). Infolgedessen verläuft die thermische Zersetzung hochmolekularer Kohlenwasserstoffe, wobei sich Kohlenwasserstoffe mit einer niedrigeren Molekülmasse und Ruß bilden. Der Ruß setzt sich auf den Heizrohroberflächen in Form einer Schicht ab. Diese Rußschicht muss permanent von den Heizrohroberflächen abgetragen werden. Dadurch kann die Wärmeübertragung von den Heizrohren zu den Abfällen im Reaktor aufrechterhalten werden. Die Rußschicht auf den Oberflächen bildet einen Wärmewiderstand. Der Wärmestrom durch diese Schicht verringert sich. Dadurch strömt in den Reaktor weniger thermische Energie ein, und die Heizrohre werden wegen einer niedrigen Wärmeabführung bis zu einer hohen Temperatur überhitzt. Infolge der Überhitzung brennen die Heizrohre durch, was einen Notfall, nämlich eine Zerstörung des Reaktors, verursachen kann.

Der Ruß von den Heizrohroberflächen wird mit den Kratzern 37 abgetragen. Bei der Schneckendrehung gleiten die Kratzer an den Seitenflächen der Heizrohre 18 entlang und tragen die Rußschicht ab. Der entfernte Ruß fällt dann unter dem Einfluss seines eigenen Gewichts auf die Schicht der Gummiabfälle ab, die mit den Schnecken 10 befördert werden.

Infolge der thermischen Zersetzung hochmolekularer Kohlenwasserstoffe wird im Gas-Dampf-Gemisch der Gehalt an wertvollen niedermolekularen Kohlenwasserstoffen erhöht. Außerdem wird der Gehalt an Teerverbindungen reduziert. Gleichzeitig reagiert der Wasserdampf mit dem Ruß (Kohlenstoff), wobei sich Wasserstoff und Kohlenstoffoxid bilden.

Bei der Wasserstoff-Einbringung in den Reaktor 6 kommt es zum Hydrieren ungesättigter Kohlenwasserstoffe, die im Gas-Dampf-Gemisch enthalten sind. Dadurch bilden sich wertvolle gesättigte Kohlenwasserstoffe, d. h., die Qualität von Produkten der Thermolyse von Gummiabfällen erhöht sich.

Die Gas-Dampf-Produkte aus dem jeweiligen Abschnitt des Reaktors werden aus dem Reaktor 6 durch die perforierten Rohre 38 mit Hilfe der Hähne 39 in den Fliehkraftabscheider 25 abgeleitet.

Infolge der Beförderung der Abfälle im Reaktor erfolgt unter der Wirkung der Schnecken die Zerkleinerung von festem Kohlerückstand, wobei sich Kohlenstoff-Feinstaub bildet. Dieser Kohlenstoff-Feinstaub tritt in den Reaktor aus. Die Ableitung des Gas-Dampf-Gemisches aus dem Reaktor, ohne dass das Gas-Dampf-Gemisch vom Feinstaub gereinigt wird, führt zum Austrag des Kohlenstoff-Feinstaubs in die Rohrleitungen und das Kondensationssystem. Aufgrund dessen werden die Rohrleitungen und das Kondensationssystem mit diesem Feinstaub verstopft. Der Querschnitt der Rohrleitungen (Durchfluss) verringert sich, und der Druck im Reaktor steigt. Das Verstopfen des Kondensationssystems mit dem Kohlenstoff-Feinstaub führt die Reduzierung der Wärmeübertragung (die Feinstaub-Schicht auf der Oberfläche des Kondensationssystems tritt als Wärmedämmung auf) sowie den Ausfall des Systems herbei. Die Zuführung des Gas-Dampf-Gemisches in den Fliehkraftabscheider 25 ermöglicht es, den Kohlenstoff-Feinstaubaustrag aus dem Reaktor zu reduzieren. Dies kommt zustande, weil das Gas-Dampf-Gemisch das Filterelement 26 in Form eines Sacks aus Hochtemperatur-Kohlenstofffasergewebe durchströmt. Das Hochtemperatur-Kohlenstofffasergewebe ist mit einer Rüttelvorrichtung versehen. Die Staubteilchen setzen sich auf der Oberfläche des Filterlements ab und werden mit der Rüttelvorrichtung 40 in den unteren Teil des Fliehkraftabscheiders 25 abgeschüttelt. Aus dem unteren Teil des Fliehkraftabscheiders 25 werden sie in den Speicher 41 entladen. Dieser Kohlenstoff stellt ein hochwertiges Produkt dar, das nach seinen Parametern dem Industrieruß mit einem niedrigen Aschegehalt ähnlich ist.

Der den Fliehkraftabscheider 25 durchströmte Gas-Dampf-Gemischstrom wird mit Hilfe des Kompressors 42 dem Kondensator 43 zugeführt. Im Kondensator wird der Gas-Dampf-Gemischstrom infolge des Wärmeaustauschs mit dem Kühlwasser, das durch das Kondensatorgehäuse vom Kühlturm 44 gepumpt wird, bis zur Wasserdampf-Kondensationstemperatur gekühlt. Dies wird anhand der Angaben des Temperatursensors 45 kontrolliert.

Durch die Abkühlung der Gas-Dampf-Produkte werden der Wasserdampf und ein Teil der Dämpfe von Kohlenwasserstoffen verflüssigt, wobei sich das Kondensat bildet. Das Kondensat besteht aus Wasser und flüssigen Kohlenwasserstoffen. Dieses Kondensat aus dem Kondensator 43 wird dem Scheider (Separator) 46 zugeführt, in dem die flüssigen Kohlenwasserstoffe vom Wasser getrennt werden. Das Wasser aus dem Scheider 46 wird dem Speicher 47 zugeführt. Aus dem Speicher 47 wird das Wasser durch den Wasserfilter 48 und über den Hahn 49 in den Verdampfer 15 zur Arbeits-Wasserdampferzeugung zurückgeführt.

Flüssige Kohlenwasserstoffe aus dem Scheider (Separator) 46 werden dem Speicher 50 zugeführt. Aus dem Speicher 50 wird ein Teil von flüssigen Kohlenwasserstoffen mengengerecht über den Hahn 51 den zylinderförmigen Brennkammern 14 zugeleitet und verbrannt. Die Energie wird zur Arbeits-Wasserdampferzeugung und der Erwärmung des Reaktors 6 verwendet.

Fester Kohlenstoffrückstand wird durch den Austritt 52 mit Hilfe der rotierenden Kühl- und Dosiervorrichtung 53 aus dem Reaktor 6 abgeführt und dem Magnetscheider 54 zugeführt. Im Magnetscheider 54 werden magnetische Einschlüsse (Partikel von Drahtlitzen) getrennt und in den Speicher 55 entladen.

Aus dem Magnetscheider 54 wird der von metallischen Einschlüssen gereinigte feste Kohlenstoffrückstand dem elektrostatischen Scheider 56 zugeführt. Hier wird ein Teil von Ruß getrennt (nichtorganische Einschlüsse: Silicium-, Zink-, Eisen-, Calciumoxide u. a.).

Der Strom des von metallischen Einschlüssen gereinigten festen Kohlenstoffrückstands wird aus dem elektrostatischen Scheider 56 in den Speicher 57 abgeführt. Nichtorganische Einschlüsse werden in den Speicher 58 abgeführt. Diese nichtorganischen Einschlüsse enthalten einen großen Anteil an Zinkoxid (je nach Typ der Gummiabfälle von 20 bis 40 Gew.-%). Deshalb stellen sie einen hochwertigen Rohstoff zur Gewinnung von Zinkoxid dar. Der Gehalt an Zinkoxid in diesen Einschlüssen übertrifft den Gehalt in Konzentraten zur Gewinnung von Zinkoxid um das Mehrfache.

Die nicht kondensierenden Dämpfe von Kohlenwasserstoffen werden aus dem Kondensator 43 über den Hahn 59 den Heizrohren 18 zugeführt. Mit Hilfe der am jeweiligen Heizrohr angeordneten Zugschieber 34 wird gleichzeitig mit der Zufuhr nicht kondensierter Gase Luft vom Heizkörper 28 zugeleitet. Die Luftmenge wird dabei durch den Öffnungsgrad des jeweiligen Zugschiebers geregelt. Die Luft wird den Heizrohren über die Zugschieber 34 anhand des Ventilators 30 zugeführt.

Infolge der Vermengung von Luft und nicht kondensierter Dämpfe von Kohlenwasserstoffen bildet sich ein Brennstoff-Luft-Gemisch. Dieses Gemisch wird unter der Wirkung der Brennerflamme entzündet und verbrannt. Die Verbrennung nicht kondensierter Dämpfe von Kohlenwasserstoffen ermöglicht es, zusätzliche Energie zur Reaktorerwärmung zu gewinnen und den Verbrauch von Kraftstoff, der den Brennern zugeführt wird, zu reduzieren. Dadurch kann die Energieeffizienz des Verwertungsverfahrens erhöht und die Emission nicht kondensierter Gase ausgeschlossen werden.

Ausführungsbeispiele der Vorrichtung gemäß der Erfindung

Die Erfindung wird anhand von folgenden Beispielen näher erläutert.

Beispiel 1

Aus dem Speicher 1 werden dem Bunker 2 bei geschlossenen Verschlüssen 3 und 4 zerkleinerte Gummiabfälle 5 in Form von Chips in einer Menge von 100 kg alle 6 Minuten zugeführt. Die Gummichips haben folgende Abmessungen: Länge l = 50 mm, Breite s = 50 mm und Höhe h = 30 mm. In diesem Fall beträgt der Gesamtverbrauch der Abfälle $G_{Abf}$ = 1000 kg/h. Nachdem der Bunker 2 gefüllt ist, wird der Verschluss 3 geöffnet. Die Abfälle in der Menge von 100 kg werden aus dem Bunker 2 nach unten geschüttet und bleiben auf dem Verschluss 4 liegen. Danach wird der Verschluss 3 geschlossen und der Verschluss 4 geöffnet. Die Abfälle werden in den Reaktor 6 geschüttet. Die Abfälle werden gleichmäßig je 50 kg pro Abschnitt des Reaktors verteilt. Danach wird der Verschluss 4 geschlossen. Somit werden die Abfälle alle 6 Minuten in den Reaktor 6 chargenweise gefördert.

Gleichzeitig mit der ersten Beschickung (1. Charge) wird das Zahnrad 8 mit dem Motor 7 in Drehung versetzt, wobei die Drehzahl 2 U/min ist. Das Zahnrad 8 kommt mit dem ersten Zahnrad 9 in Eingriff, das mit der ersten Schnecke 10 verbunden ist, und das Zahnrad 8 kommt mit dem zweiten Zahnrad 9 in Eingriff, das mit der zweiten Schnecke 10 verbunden ist. Dank solch einem Anschluss der Zahnräder werden die Schnecken 10 bei dem drehenden Zahnrad 8 gegenläufig zueinander gedreht. Da eine Schnecke ein linksgängiges Förderband und die zweite Schnecke ein rechtsgängiges Förderband aufweist, werden die Gummiabfälle einläufig befördert, während die Schnecken sich gegenläufig zueinander drehen, d. h. von der Beschickung zur Entladung transportiert.

Der Außendurchmesser der jeweiligen Schnecke 10 sei zu d = 0,8 m und der Gang sei zu t = 0,2 m angenommen. Die Schnecken drehen sich mit der Drehzahl 2 U/min. Die Länge der jeweiligen Schnecke beträgt $L_{1,2}$ =6 m.

Die Geschwindigkeit der axialen Materialverschiebung in der Schnecke ist:

$$V = n_p \times t/60s = 2 \times 0,2m/60s = 0,0067m/s \quad (1),$$

wobei

$n_p$ die Drehzahl der Schraube pro Minute (im vorliegenden Fall angenommen 2 Umdrehungen) und
t der Gang der Schnecke (im vorliegenden Fall angenommen t = 0,20 m) ist.

Die Durchgangszeit der Abfälle durch die Schnecke mit der Länge von 6 m beträgt

$$T_{Abf} = 6m/0{,}0067m/s = 896s \ (2).$$

Diese Zeit (ca. 15 Minuten) reicht für den Ablauf einer vollständigen thermischen Zersetzung der Chips vorgegebener Größe in gasförmige und feste Produkte aus. Die Förderzeit der Abfälle im Reaktor wird durch die Änderung der Drehzahl des Motors 7 geregelt. Gleichzeitig mit dem Beginn der Beförderung der Abfälle aus dem Behälter 11 über den Regulierhahn 12 in den jeweiligen Brenner 13 wird der Kraftstoff mit einem Verbrauch von 40 kg/h zugeführt und verbrannt. Bei der Verbrennung insgesamt in zwei Brennern von 80 kg/h flüssigem Kraftstoff mit einem spezifischen Wärmewert 40.000 kJ/kg werden 1.600 kg/h Verbrennungsprodukte gebildet. Die Brenner 13 sind in den zylinderförmigen Brennkammern 14 angeordnet. Bei der Kraftstoffverbrennung erfolgt eine Wirbelbildung der Verbrennungsprodukte mit einer hohen Temperatur. Infolgedessen wird der Kraftstoff vollständig verbrannt, und die Bildung von schädlichen Verbindungen (Benzo[a]pyren u. a.) in den Verbrennungsprodukten wird reduziert. Dabei wird gleichzeitig der Wärmeaustausch zwischen den Verbrennungsprodukten und dem Verdampfer 15 intensiviert.

Durch die Wärmeübertragung von den Verbrennungsprodukten werden in zwei Verdampfern 100 kg/h Wasserdampf erzeugt. Infolgedessen werden die Verbrennungsprodukte am Austritt aus der jeweiligen zylinderförmigen Brennkammer eine Temperatur von 900°C aufgrund des Wärmeaustauschs mit dem Verdampfer 15 aufweisen. Somit erfolgt die Kühlung der Verbrennungsprodukte von 1.200°C auf 900°C. Dies sorgt dafür, dass die Rohre der Schnecke nicht durchbrennen. Gleichzeitig wird dabei die thermische Energie zur Erzeugung des Arbeits-Wasserdampfes nützlich verwendet.

Der Wasserdampf aus den Verdampfern 15 wird bei einer Temperatur von 100°C über die Hähne 16 mit dem Durchsatz von 50 kg/h aus dem jeweiligen Verdampfer der jeweiligen Rohrschlange 17 zugeführt.

Aus den zylinderförmigen Brennkammern 14 strömen die Kraftstoff-Verbrennungsprodukte mit dem Durchsatz von je 800 kg/h aus der jeweiligen Brennkammer ins jeweilige Heizrohr 18 bei einer Temperatur von 900°C ein. Die Kraftstoff-Verbrennungsprodukte fließen durch die Heizrohre 18 und erwärmen den Reaktor. Außerdem wird dabei der durch die Rohrschlange 17 strömende Wasserdampf erwärmt. Die Erwärmung erfolgt durch die Strahlung von den Heizrohren 18 und durch den Konvektionswärmeaustausch. Dabei werden 85% thermischer Energie von den Heizrohren zu den Abfällen durch Strahlung und 15% durch den Konvektionswärmeaustausch übertragen.

Die Wärmemenge wird durch die Durchschnittstemperatur der Oberfläche der Heizrohre 18 und die Durchschnittstemperatur der Abfälle bestimmt.

Die Wärmeübertragung durch Strahlung lässt sich in folgender Weise berechnen. Zunächst wird der Strahlungs-Wärmedurchgangssatz nach der Formel ermittelt:

$$q_{St} = C_0 \times \varepsilon[(\check{T}_T/100)^4 - (\check{T}_{Abf}/100)^4], \ (3)$$

wobei:

$\check{T}_T$ die durchschnittliche Temperatur der Heizrohrwandung ist. Im vorliegenden Fall ist $\check{T}_T = 0{,}5(673\,K + 973\,K) = 823\,K$;
$\check{T}_{Abf}$ die durchschnittliche Temperatur der Gummiabfälle ist. Im vorliegenden Fall ist $\check{T}_{Abf} = 0{,}5(293K + 773\,K) = 533\,K$;
$C_0$ die Strahlungsfähigkeit eines idealem schwarzen Körpers ist, $C_0 = 5{,}67 \ W/(m^2 \cdot K^4)$; $\varepsilon$ - Emissionsvermögen von Stahl, $\varepsilon = 0{,}8$ (s. W.P. Issatschenko, W.A. Ossipowa, A.S. Sukomel. Teploperedatscha (Wärmeübertragung): Ein Lehrbuch für Hochschulen - 4. Auflage - M.: Energoisdat, 1981, S. 406, Tabelle 9).

Der Strahlungswärmedurchgangssatz $q_{St}H$ der Heizrohrwandung zu den Abfällen auf Grund von (3) ist:

$$q_{St}^H = 5{,}67 \times 0{,}8 \times [(823/100)^4 - (533/100)^4] = 17.055 \ W/m^2. \ (4)$$

Der Heizrohrdurchmesser ist gleich $d_{HR} = 0{,}3$ m. Bei einer Länge $L_{HR} = 6$ m wird die Mantelfläche $S = \pi d_{HR} L_{HR} = 3{,}14 \times 0{,}3 \ m \times 6 \ m = 5{,}65 \ m^2$ betragen. Somit wird der gesamte Strahlungswärmedurchgangssatz vom Heizrohr zu den Abfällen betragen:

$$Q_{St} = q_{St}^H \times S = 17.055 \ W/m^2 \times 5{,}65 \ m^2 = 96.360 \ W \ (96{,}4 \ kW). \ (5)$$

Durch den Konvektionswärmeaustausch wird zu den Abfällen die folgende Menge thermischer Energie übertragen: $Q_k = [(Q_{St})/0{,}85] \times 0{,}15 = [(96{,}4 \ kW)/0{,}8] \times 0{,}15 = 17 \ kW$.

Somit beträgt die gesamte Menge thermischer Energie, die von dem jeweiligen Heizrohr zu den Gummiabfällen übertragen wird, 96,4 kW + 17 kW=113,4 kW.

Von den beiden Heizrohren zu den Abfällen im Reaktor werden 226,8 kW thermischer Energie übertragen.

Diese Energie ist unter Berücksichtigung der von der Wärmekammer des Reaktors zugeführten Wärme für die thermische Zersetzung von 1.000 kg/h Gummiabfälle ausreichend.

Der Wasserdampfverbrauch wird auf einem Wert von 50 kg/h aufrechterhalten, indem der Wasserdampfverbrauch über die jeweilige Rohrschlange 17 mit dem Hahn 16 geregelt wird. Infolgedessen stellt sich am Dampfaustritt 19 eine Wasserdampftemperatur von 450°C ein. Dabei wird die Temperatur des Wasserdampfes, der aus der jeweiligen Rohrschlange 17 durch den Dampfaustritt 19 ausströmt, mit Hilfe von Temperatursensoren 20 kontrolliert.

Aus den Heizrohren 18 strömen die Verbrennungsprodukte durch die Rohrleitung 21 in die Mantelheizung 22 hinaus, mit dem Durchsatz von 1.600 kg/h und bei einer Temperatur von T = 500°C. Diese Rohrleitung verbindet die beiden Heizrohre. Bei dem Durchgang der Verbrennungsprodukte durch die Mantelheizung 22 wird der Reaktor zusätzlich erwärmt.

Die Verbrennungsprodukte werden über den Hahn 23 mit dem Durchsatz von 1.600 kg/h in den Filtermantel 24 des Fliehkraftabscheiders 25 geleitet. Dies ist nötig, um die Temperatur des Fliehkraftabscheiders höher als die Kondensations-Temperatur der Dämpfe von Kohlenwasserstoffen aufrechtzuerhalten, die sich bei der Thermolyse der Gummiabfälle bilden. Im vorliegenden Fall ist diese Temperatur T = 400°C. Im entgegengesetzten Fall wird ein Teil der Dämpfe von Kohlenwasserstoffen bei einer Temperaturabnahme im Fliehkraftabscheider 25 verflüssigt und am Filterelement 26 abgesetzt. Das Filterelement wird in diesem Fall ausfallen.

Die Temperatur im Fliehkraftabscheider 25 wird dabei nach den Angaben des Temperatursensors 27 kontrolliert und mit dem Wert T = 400°C aufrechterhalten, indem der Verbrauch der Verbrennungsprodukte anhand des Hahns 23 so geregelt wird, dass ein Teil der Verbrennungsprodukte bei einer Temperaturerhöhung im Fliehkraftabscheider in den Heizkörper 28 unter Umgehung des Fliehkraftabscheiders geleitet wird. Die Verbrennungsprodukte werden über den Filtermantel 24 des Fliehkraftabscheiders 25 mit einem Durchsatz von 1.600 kg/h in den Heizkörper 28 geleitet und bis auf eine Temperatur von 250°C gekühlt. Dies erfolgt, indem die Luft durch die Heizkammer 29 mit einem Ventilator 30 geblasen wird.

In diesem Fall ist die Menge der zu erwärmenden Luft

$$M_L = G_{Vp} \times C_{Vp} \times (T_{EVp} -$$

$$T_{AVp})/C_L \times (T_A - T_E) = 1.600 \text{ kg} \times 1,2 \text{ kJ/kg°C} \times (400°C - 250°C)/3.600 \text{ s} \times 1,2 \text{ kJ/kg°C}$$

$$\times (150°C - 20°C) = 0,52 \text{ kg/s}, \quad (6)$$

wobei

$M_L$ die Menge der zu erwärmenden Luft in kg/s;
$G_{Vp}$ der Durchsatz der Verbrennungsprodukte, 1.600 kg/h;
$C_{Vp}$ die spezifische Wärmekapazität der Verbrennungsprodukte, 1,2 kJ/kg°C;
$C_L$ die spezifische Wärmekapazität von Luft, 1,2 kJ/kg°C;
$T_{EVp}$ die Temperatur der Verbrennungsprodukte am Eintritt in den Heizkörper, 400°C;
$T_{AVp}$ die Temperatur der Verbrennungsprodukte am Austritt aus dem Heizkörper, 250°C;
$T_A$ die Lufttemperatur am Austritt aus dem Heizkörper, 180°C;
$T_E$ die Lufttemperatur am Eintritt in den Heizkörper, 20°C ist.

Diese Luftmenge reicht für die vollständige Verbrennung von flüssigem Kraftstoff mit einem Verbrauch von 80 kg/h in zwei zylinderförmigen Brennkammern aus.

Die Abkühltemperatur der Verbrennungsprodukte wird dabei anhand der Angaben des Temperatursensors 31 kontrolliert. Die gekühlten Verbrennungsprodukte werden aus dem Heizkörper 28 mittels des Saugzugs 32 mit einem Durchsatz von 1.600 kg/h in den Schornstein 33 abgeleitet. Die im Heizkörper erhitzte Luft wird mit dem Ventilator 30 mit einem Durchsatz von 0,26 kg/s über den Zugschieber 34 in ein Heizrohr 18 und mit dem Durchsatz von 0,26 kg/s in das andere Heizrohr geführt.

Dies ermöglicht es, die Wärme der Verbrennungsprodukte nützlich zu verwenden, wobei die Verbrennungsprodukte aus dem Filtermantel 24 bei einer hohen Temperatur (400°C) austreten. Dabei wird der Kraftstoffverbrauch durch eine vollständige Ausnutzung der Wärme der Verbrennungsprodukte reduziert und die Emission thermischer Energie vermieden, d. h. die Energieeffizienz des Verfahrens zur Verwertung von Altreifen wird erhöht.

Unmittelbar wird in den Reaktor 6 mit dem überhitzen Wasserdampf im Bereich der Beschickung mit Ausgangsgummiabfällen Wärme eingeführt. Die Ausgangsabfälle haben eine Temperatur, die annähernd gleich der Umgebungstemperatur ist. (Die dem Reaktor zugeführten Abfälle sind noch nicht durchgewärmt.)

Die Zuführung des überhitzen Wasserdampfes in diesem Bereich (des Reaktors) stellt eine große Temperaturdifferenz zwischen dem bis zu 500°C überhitzten Wasserdampf und den kalten Abfällen mit einer Temperatur von ca. 20°C sicher. Durch diese große Temperaturdifferenz lassen sich hohe Wärmeströme des Wasserdampfs zu den Abfällen mittels einer Konvektionsübertragung thermischer Energie bilden. Infolgedessen wird die Erwärmung der Abfälle beschleunigt und die Verwertungszeit reduziert.

Die Gummiabfälle werden im Reaktor 6 gefördert und durch den Kontakt mit den heißen Reaktorwänden erwärmt. Außerdem erfolgt die genannte Erwärmung durch den Konvektionswärmeaustausch mit dem Wasserdampf, der dem Reaktor zugeführt wird oder auch durch Strahlung von den Heizrohren und durch den Konvektionswärmeaustausch mit den Heizrohroberflächen.

Bei der Erwärmung der Gummiabfälle im Reaktor 6 bis zu einer Temperatur von 400°C beginnt die Thermolyse der Gummiabfälle und verläuft mit der Freisetzung von gasförmigen Produkten und festem Kohlenstoffrückstand. Im vorliegenden Fall werden bei der Verwertung von 1.000 kg/h Gummiabfällen 40 Gew.-% der Dämpfe von Kohlenwasserstoffen und 60 Gew.-% von festem Rückstand gebildet. Die Temperatur im Reaktor 6 wird dabei nach den Angaben des Temperatursensors 35 kontrolliert und durch Änderung der Kraftstoffmenge geregelt, die in den Brennern 13 verbrannt wird.

Gasförmige Zersetzungsprodukte der Abfälle mit einem Durchsatz von 400 kg/h vermischen sich mit dem Wasserdampf. (Der Wasserdampf wird dem Reaktor mit einem Durchsatz von 100 kg/h zugeführt.) Infolgedessen wird im Reaktor 6 ein Gas-Dampf-Gemisch in einer Menge von 400 kg/h + 100 kg/h = 500 kg/h gebildet, und der Druck im Reaktor steigt und wird höher als der Atmosphärendruck. Um dabei den Austritt von Gas-Dampf-Produkten aus dem Reaktor 6 an die Umgebung(sluft) auszuschließen und die Drehung der Schnecken 10 sicherzustellen, sind im jeweiligen Abschnitt des Reaktors die Hochtemperaturpackungen 36 angeordnet.

Die Gas-Dampf-Produkte, die durch die Thermolyse der Gummiabfälle gebildet wurden, sind in Kontakt mit den Heizrohroberflächen mit einer hohen Temperatur. Infolgedessen läuft eine thermische Zersetzung hochmolekularer Kohlenwasserstoffe ab, wobei sich Kohlenwasserstoffe mit einer niedrigeren Molekülmasse und Ruß bilden. Der Ruß setzt sich auf den Heizrohroberflächen in Form einer Schicht ab. Im vorliegenden Fall werden 20 Gew.-% Ruß von der Menge der Dämpfe von Kohlenwasserstoffen gebildet, d. h. 400 kg/h x 0,2 = 80 kg/h. Diese Rußschicht muss permanent von den Heizrohroberflächen abgetragen werden. Dadurch kann die Wärmeübertragung von den Heizrohren zu den Abfällen im Reaktor aufrechterhalten werden. Die Rußschicht auf den Oberflächen bildet einen Wärmewiderstand. Der Wärmestrom durch diese Schicht verringert sich. Dadurch strömt in den Reaktor weniger thermische Energie ein, und die Heizrohre werden wegen einer niedrigen Wärmeabführung bis zu einer hohen Temperatur überhitzt. Infolge der Überhitzung brennen die Heizrohre durch, was einen Notfall, nämlich eine Zerstörung des Reaktors, verursachen kann.

Der Ruß von den Heizrohroberflächen wird mit den Kratzern 37 abgetragen. Bei der Schneckendrehung gleiten die Kratzer an den Seitenflächen der Heizrohre 18 entlang und tragen die Rußschicht ab. Der entfernte Ruß fällt dann unter dem Einfluss seines eigenen Gewichts in einer Menge von 80 kg/h auf die Schicht der Gummiabfälle ab, die mit den Schnecken 10 befördert werden.

Infolge der thermischen Zersetzung hochmolekularer Kohlenwasserstoffe wird im Gas-Dampf-Gemisch der Gehalt an wertvollen niedermolekularen Kohlenwasserstoffen erhöht. Außerdem wird der Gehalt an Teerverbindungen reduziert. Gleichzeitig reagiert der Wasserdampf mit dem Kohlenstoff, wobei sich Wasserstoff und Kohlenstoffoxid bilden. Bei der Einbringung von Wasserstoff in den Reaktor 6 kommt es zum Hydrieren ungesättigter Kohlenwasserstoffe, die im Gas-Dampf-Gemisch enthalten sind. Dadurch bilden sich wertvolle gesättigte Kohlenwasserstoffe, d. h. die Qualität von Produkten der Thermolyse von Gummiabfällen erhöht sich.

Die Gas-Dampf-Produkte aus dem jeweiligen Abschnitt des Reaktors werden durch die perforierten Rohre 38 mit Hilfe des Hahns 39 mit einem Gesamtdurchsatz von 500 kg/h - 80 kg/h = 420 kg/h (wobei 80 kg/h die sich gebildete Rußmenge ist) aus dem Reaktor 6 in den Fliehkraftabscheider 25 abgeleitet.

Infolge der Beförderung der Abfälle im Reaktor erfolgt unter der Wirkung der Schnecken die Zerkleinerung von festem Kohlerückstand, wobei sich Kohlenstoff-Feinstaub bildet. Dieser Kohlenstoff-Feinstaub tritt in den Reaktor aus. Die Ableitung des Gas-Dampf-Gemisches aus dem Reaktor, ohne dass das Gas-Dampf-Gemisch von Feinstaub gereinigt wird, führt zum Austrag des Kohlenstoff-Feinstaubs in die Rohrleitungen und das Kondensationssystem. Aufgrund dessen werden die Rohrleitungen und das Kondensationssystem mit diesem Feinstaub verstopft. Der Querschnitt der Rohrleitungen (Durchfluss) verringert sich, und der Druck im Reaktor steigt. Das Verstopfen des Kondensationssystems mit dem Kohlenstoff-Feinstaub führt die Reduzierung der Wärmeübertragung (die Feinstaub-Schicht auf der Oberfläche des Kondensationssystems tritt als Wärmedämmung auf) sowie den Ausfall des Systems herbei.

Die Zuführung des Gas-Dampf-Gemisches in den Fliehkraftabscheider 25 ermöglicht es, den Kohlenstoff-Feinstaubaustrag aus dem Reaktor zu reduzieren. Dies kommt zustande, weil das Gas-Dampf-Gemisch das Filterelement 26 in Form eines Sacks aus Hochtemperatur-Kohlenstofffasergewebe durchströmt. Das Hochtemperatur-Kohlenstofffasergewebe ist mit einer Rüttelvorrichtung versehen. Die Staubteilchen setzen sich auf der Oberfläche des Filterlements ab und werden mit der Rüttelvorrichtung 40 in den unteren Teil des Fliehkraftabscheiders 25 abgeschüttelt. Aus dem unteren Teil des Fliehkraftabscheiders 25 werden sie in den Speicher 41 entladen. Dieser Kohlenstoff stellt ein hochwertiges Produkt dar, das nach seinen Parametern dem Industrieruß mit einem niedrigen Aschegehalt ähnlich ist.

Im vorliegenden Fall ist die Menge des aus dem Reaktor ausgetragenen Kohlenstoff-Feinstaubs gleich 5 Gew.-% der Menge des sich bildenden festen Rückstands, d. h. 600 kg/h x 0,05 = 30 kg/h. Dieser Kohlenstoff-Feinstaub wird vom Fliehkraftabscheider aufgefangen und mit einem Verbrauch von 30 kg/h in den Speicher 41 abgeleitet.

Der den Fliehkraftabscheider 25 durchströmte Gas-Dampf-Gemischstrom wird mit Hilfe des Kompressors 42 und mit einem Durchsatz von 420 kg/h dem Kondensator 43 zugeführt. Im Kondensator wird der Gas-Dampf-Gemischstrom infolge des Wärmeaustausches mit dem Kühlwasser, das durch das Kondensatorgehäuse vom Kühlturm 44 gepumpt wird, bis zur Wasserdampf-Kondensationstemperatur T = 100°C gekühlt. Dies wird anhand der Angaben des Temperatursensors 45 kontrolliert.

Durch die Abkühlung der Gas-Dampf-Produkte wird der Wasserdampf in einer Menge von 82 kg/h verflüssigt. Dies geschieht, weil 18 kg/h Wasserdampf für die Reaktion mit dem Kohlenstoff verbraucht wurden, wobei sich brennbare Gase gebildet haben (Wasserstoff und Kohlenstoffoxid).

Ein Teil der Dämpfe der Kohlenwasserstoffe in einer Menge von 220 kg/h wird verflüssigt, wobei sich ein Kondensat bildet. Infolgedessen wird ein Gemisch aus Wasser und flüssigen Kohlenwasserstoffen in einer Menge von 82 kg/h + 220 kg/h = 302 kg/h gebildet. Dieses Kondensat aus dem Kondensator 43 wird mit einem Verbrauch von 302 kg/h dem Scheider (Separator) 46 zugeführt, wobei flüssige Kohlenwasserstoffe vom Wasser getrennt werden. Das Wasser aus dem Scheider 46 wird mit einem Durchfluss von 82 kg/h dem Speicher 47 zugeführt. Aus dem Speicher 47 wird das Wasser durch den Wasserfilter 48 und über den Hahn 49 in den Verdampfer 15 zur Arbeitswasserdampferzeugung zurückgeführt.

Flüssige Kohlenwasserstoffe aus dem Scheider 46 werden mit einem Durchfluss von 220 kg/h dem Speicher 50 zugeführt. Aus dem Speicher 50 werden 17 kg/h flüssiger Kohlenwasserstoffe mengengerecht über den Hahn 51 den zylinderförmigen Brennkammern 14 zugeleitet und verbrannt. Die Energie wird zur Arbeits-wasserdampferzeugung und zur Erwärmung des Reaktors 6 verwendet.

Fester Kohlenstoffrückstand wird durch den Austritt 52 mit Hilfe der rotierenden Kühl- und Dosiervorrichtung 53 mit einem Verbrauch von 600 kg/h + 80 kg/h - 12 kg/h - 30 kg/h = 38 kg/h (30 kg/h von festem Kohlenstoffrückstand als Staub haben sich im Fliehkraftabscheider 25 abgesetzt, 12 kg/h Kohlenstoff wurden für die Reaktion mit Wasserdampf verbraucht, und 80 kg Kohlenstoff in Form von Ruß wurden in die festen Produkte eingebracht) aus dem Reaktor 6 abgeführt und dem Magnetscheider 54 zugeführt. Im Magnetscheider 54 werden magnetische Einschlüsse (Partikel von Drahtlitzen) in einer Menge von 50 kg/h getrennt und in den Speicher 55 entladen.

Aus dem Magnetscheider 54 wird der von metallischen Einschlüssen gereinigte feste Kohlenstoffrückstand mit einem Verbrauch von 638 kg/h - 50 kg/h = 588 kg/h dem elektrostatischen Scheider 56 zugeführt. Hier wird ein Teil des Rußes getrennt (nichtorganische Einschlüsse: Silicium-, Zink-, Eisen-, Calciumoxide u. a.) in einer Menge von 5 Gew.-%, d. h. 588 kg/h x 0,05 = 29 kg/h.

Der Strom von festem Kohlenstoffrückstand wird aus dem elektrostatischen Scheider 56 mit einem Verbrauch von 588 kg/h - 29 kg/h = 559 kg/h in den Speicher 57 abgeleitet. Nichtorganische Einschlüsse in einer Menge von 29 kg/h werden in den Speicher 58 abgeführt. Diese nichtorganischen Einschlüsse enthalten einen großen Anteil an Zinkoxid (je nach Typ der Gummiabfälle von 20 bis 40 Gew.-%). Deshalb stellen sie einen hochwertigen Rohstoff zur Gewinnung von Zinkoxid dar. Der Gehalt an Zinkoxid in diesen Einschlüssen übertrifft dessen Gehalt in Konzentraten zur Gewinnung von Zinkoxid um das Mehrfache.

Somit verringert sich der Aschegehalt in festen Produkten von 12 Gew.-% bis auf 7 Gew.-%, was zur Erhöhung der Qualität von festen Produkten führt.

Die nicht kondensierten Dämpfe der Kohlenwasserstoffe werden aus dem Kondensator 43 über den Hahn 59 mit einem Durchsatz von 100 kg/h + 28 kg/h = 128 kg/h den Heizrohren 18 zugeführt (je 63 kg/h pro Heizrohr). Mit Hilfe der am jeweiligen Heizrohr angeordneten Zugschieber 34 wird Luft zugeführt. Dabei macht 28 kg/h Kohlenstoffoxid aus, das sich bei der Reaktion vom Wasserdampf mit dem Kohlenstoff von festem Rückstand gebildet hat. Gleichzeitig mit der Zufuhr nicht kondensierter Dämpfe wird Luft vom Heizkörper 28 zugeleitet (mit einem Verbrauch von 10 kg Luft pro 1 kg nicht kondensierter Dämpfe), d. h. 1.280 kg/h. Die Luftmenge wird dabei durch den Öffnungsgrad der Zugschieber 34 geregelt. Die Luft wird den Heizrohren über die Zugschieber 34 anhand des Ventilators 30 zugeführt.

Infolge der Vermengung von Luft und nicht kondensierter Dämpfe der Kohlenwasserstoffe bildet sich ein Brennstoff-Luft-Gemisch. Dieses Gemisch wird unter der Wirkung der Brennerflamme entzündet und verbrannt. Die Verbrennung nicht kondensierter Dämpfe der Kohlenwasserstoffe in einer Menge von 128 kg/h entspricht der Verbrennung von 63 kg/h von flüssigem Kraftstoff mit einem spezifischen Wärmewert von 40.000 kJ/kg und ermöglicht es, zusätzliche Energie zur Reaktorerwärmung zu gewinnen und den Verbrauch von Kraftstoff, der den Brennern zugeführt wird, von 80 kg/h bis auf 17 kg/h zu reduzieren. Dadurch kann die Energieeffizienz des Verwertungsverfahrens erhöht, und die Emission nicht kondensierter Gase kann ausgeschlossen werden.

Beispiel 2

Aus dem Speicher 1 werden dem Bunker 2 bei geschlossenen Verschlüssen 3 und 4 zerkleinerte Gummiabfälle 5 in Form von Chips in einer Menge von 150 kg alle 6 Minuten zugeführt. Die Gummichips haben folgende Abmessungen: Länge l = 30 mm, Breite s = 50 mm und Höhe h = 20 mm. In diesem Fall beträgt der Gesamtverbrauch der Abfälle Go = 1.500 kg/h. Nachdem der Bunker 2 gefüllt ist, wird der Verschluss 3 geöffnet. Die Abfälle in einer Menge von 150 kg werden aus dem Bunker 2 nach unten ausgeschüttet und bleiben auf dem Verschluss 4 liegen. Danach wird der Verschluss 3 geschlossen, und der Verschluss 4 wird geöffnet. Die Abfälle werden in den Reaktor 6 eingeschüttet. Die Abfälle werden gleichmäßig je 75 kg pro Abschnitt des Reaktors verteilt. Danach wird der Verschluss 4 geschlossen. Somit werden die Abfälle alle 6 Minuten in den Reaktor 6 chargenweise (portionsweise) gefördert.

Gleichzeitig mit der ersten Beschickung (1. Charge) wird das Zahnrad 8 mit dem Motor 7 in Drehung versetzt, wobei die Drehzahl 3 U/min ist. Das Zahnrad 8 kommt mit dem ersten Zahnrad 9 in Eingriff, das mit der ersten Schnecke 10 verbunden ist. Das Zahnrad 8 kommt mit dem zweiten Zahnrad 9 in Eingriff, das mit der zweiten Schnecke 10 verbunden ist. Dank solch einem Anschluss der Zahnräder werden die Schnecken 10 bei dem drehenden Zahnrad 8 gegenläufig zueinander gedreht. Da eine Schnecke ein linksgängiges Förderband und die zweite Schnecke ein rechtsgängiges Förderband hat, werden die Gummiabfälle einläufig befördert, während die Schnecken sich gegenläufig zueinander drehen, d. h. von der Beschickung zur Entladung transportiert.

Der Außendurchmesser der jeweiligen Schnecke 10 sei mit d = 0,8 m und der Gang mit t = 0,2 m angenommen. Die Schnecken drehen sich mit einer Drehzahl von 3 U/min. Die Länge der jeweiligen Schnecke beträgt $L_{1,2}$ = 6 m.

Die Geschwindigkeit der axialen Materialverschiebung in der Schnecke ist:

$$V = n_p \times t/60 \text{ s} = 3 \times 0,2 \text{ m}/60 \text{ s} = 0,01 \text{ m/s}, \quad (1)$$

wobei

$n_p$ die Drehzahl der Schraube pro Minute (im vorliegenden Fall angenommen 3 Umdrehungen);
t der Gang der Schnecke (im vorliegenden Fall angenommen t = 0,20 m) ist.

Die Durchgangszeit der Abfälle durch die Schnecke mit einer Länge von 6 m beträgt

$$\tau_{Abf} = 6 \text{ m}/0,01 \text{ m/s} = 600 \text{ s}, \quad (2).$$

Diese Zeit (ca. 10 Minuten) reicht für den Ablauf einer vollständigen thermischen Zersetzung der Chips vorgegebener Größe in gasförmige und feste Produkte aus. Die Förderzeit der Abfälle im Reaktor wird durch die Änderung der Drehzahl des Motors 7 geregelt. Gleichzeitig mit dem Beginn der Beförderung der Abfälle aus dem Behälter 11 über den Regulierhahn 12 in den jeweiligen Brenner 13 wird der Kraftstoff mit einem Verbrauch von 60 kg/h zugeführt und verbrannt. Bei der Verbrennung in zwei Brennern von 120 kg/h des flüssigen Kraftstoffs mit einem spezifischen Wärmewert von 40.000 kJ/kg werden 2.400 kg/h Verbrennungsprodukte gebildet. In den Brennern stellt sich die Temperatur T = 1.200°C ein. Die Brenner 13 sind in den zylinderförmigen Brennkammern 14 eingebaut. Bei der Kraftstoffverbrennung erfolgt eine Wirbelbildung der Verbrennungsprodukte mit einer hohen Temperatur. Infolgedessen wird der Kraftstoff vollständig verbrannt, und die Bildung von schädlichen Verbindungen (Benzo[a]pyren u. a.) in den Verbrennungsprodukten wird reduziert. Dabei wird gleichzeitig der Wärmeaustausch zwischen den Verbrennungsprodukten und dem Verdampfer 15 intensiviert.

Durch die Wärmeübertragung der Verbrennungsprodukte werden in zwei Verdampfern 150 kg/h Wasserdampf erzeugt. Infolgedessen werden die Verbrennungsprodukte am Austritt aus der jeweiligen zylinderförmigen Brennkammer eine Temperatur von 950°C aufgrund des Wärmeaustausches mit dem Verdampfer 15 aufweisen. Somit erfolgt die Kühlung der Verbrennungsprodukte von 1.200°C bis auf 950°C. Dies sorgt dafür, dass die Rohre der Schnecke nicht durchbrennen. Gleichzeitig wird dabei die thermische Energie zur Erzeugung des Arbeits-wasserdampfes nützlich verwendet.

Der Wasserdampf aus den Verdampfern 15 wird bei einer Temperatur von 110°C über die Hähne 16 mit einem Durchsatz von 75 kg/h aus dem jeweiligen Verdampfer der jeweiligen Rohrschlange 17 zugeführt.

Aus den zylinderförmigen Brennkammern 14 strömen die Kraftstoffverbrennungsprodukte mit einem Durchsatz von je 1.200 kg/h ins jeweilige Heizrohr 18 bei einer Temperatur von 950°C ein. Die Kraftstoffverbrennungsprodukte fließen durch die Heizrohre 18 und erwärmen den Reaktor. Außerdem wird dabei der durch die Rohrschlange 17 strömende Wasserdampf erwärmt. Die Erwärmung erfolgt durch Strahlung von den Heizrohren 18 und durch den Konvektionswärmeaustausch. Dabei werden 85% thermischer Energie von den Heizrohren zu den Abfällen durch Strahlung und 15% durch den Konvektionswärmeaustausch übertragen. Die Wärmemenge wird durch die Durchschnittstemperatur der Oberfläche von den Heizrohren 18 und die Durchschnittstemperatur der Abfälle bestimmt.

Die Wärmeübertragung durch Strahlung lässt sich in folgender Weise berechnen. Zunächst wird der Strahlungswärmedurchgangssatz nach der Formel ermittelt:

$$q_{St} = C_0 \times \varepsilon[(\check{T}_T/100)^4 - (\check{T}_{Abf}/100)^4], \quad (3)$$

wobei:

$\check{T}_T$ die durchschnittliche Temperatur der Heizrohroberfläche ist. Im vorliegenden Fall ist $\check{T}_T = 0{,}5(773\,K + 1.073\,K) = 923\,K$;

$\check{T}_{Abf}$ die durchschnittliche Temperatur der Gummiabfälle. Im vorliegenden Fall ist $\check{T}_{Abf} = 0{,}5(303\,K + 823\,K) = 563\,K$;

Co die Strahlungsfähigkeit eines idealen schwarzen Körpers,

$$C_0 = 5{,}67 \; W/(m^2 \bullet K^4);$$

$\varepsilon$ das Emissionsvermögen von Stahl,

$\varepsilon = 0{,}8$ (s. W.P. Issatschenko, W.A. Ossipowa, A.S. Sukomel. Teploperedatscha (Wärmeübertragung): Ein Lehrbuch für Hochschulen - 4. Auflage - M.: Energoisdat, 1981, S. 406, Tabelle 9).

Der Strahlungswärmedurchgangssatz $q_{St}^H$ auf Grund von (3) ist:

$$q_{St}^H = 5{,}67 \times 0{,}8 \times [(823/100)^4 - (533/100)^4 = 17.055 \; W/m^2. \quad (4)$$

Der Heizrohr-Durchmesser ist gleich $d_{HR} = 0{,}3\,m$. Bei einer Länge von $L_{HR} = 6\,m$ wird die Mantelfläche $S = \pi d_{HR} L_{HR} = 3{,}14 \times 0{,}3 \times 6\,m = 5{,}65\,m^2$ betragen. Somit wird der gesamte Strahlungswärmedurchgangssatz vom Heizrohr zu den Abfällen wie folgt betragen:

$$Q_{St} = q_{St}^H \times S = 28.363 \; W/m^2 \times 5{,}65 \; m^2 = 160.250 \; W \; (160{,}3 \; kW). \quad (5)$$

Durch den Konvektionswärmeaustausch wird zu den Abfällen die folgende Menge thermischer Energie übertragen: $Q_K = [(Q_{St})/0{,}85] \times 0{,}15 = [(160{,}3\,kW)/0{,}8] \times 0{,}15 = 30kW$.

Somit beträgt die gesamte Menge thermischer Energie, die von dem jeweiligen Heizrohr zu den Gummiabfällen übertragen wird,:

$$160{,}3 \; kW + 30 \; kW = 190{,}3 \; kW.$$

Von den beiden Heizrohren zu den Abfällen im Reaktor werden 380,6 kW thermischer Energie übertragen.

Diese Energie ist unter Berücksichtigung der von der Wärmekammer des Reaktors zugeführten Wärme für die thermische Zersetzung von 1.500 kg/h Gummiabfälle ausreichend.

Der Wasserdampfverbrauch wird mit einem Wert von 75 kg/h aufrechterhalten, indem der Wasserdampfverbrauch über die jeweilige Rohrschlange 17 mit dem Hahn 16 geregelt wird. Infolgedessen stellt sich am Dampfaustritt 19 eine Wasserdampftemperatur von 500°C ein. Der Wasserdampf strömt aus der jeweiligen Rohrschlange 17 durch den Dampfaustritt 19 heraus. Die Wasserdampftemperatur wird dabei mit Hilfe von Temperatursensoren 20 kontrolliert.

Aus den Heizrohren 18 strömen die Verbrennungsprodukte durch die Rohrleitung 21 in die Mantelheizung 22 hinaus mit einem Durchsatz von 2.400 kg/h und bei einer Temperatur von T = 600°C. Diese Rohrleitung verbindet die beiden Heizrohre. Bei dem Durchgang der Verbrennungsprodukte durch die Mantelheizung 22 wird der Reaktor zusätzlich erwärmt.

Die Verbrennungsprodukte werden über den Hahn 23 mit einem Durchsatz von 2.400 kg/h in den Filtermantel 24 des Fliehkraftabscheiders 25 geleitet. Dies ist nötig, um die Temperatur des Fliehkraftabscheiders höher als die Kondensations-temperatur der Dämpfe von Kohlenwasserstoffen aufrechtzuerhalten, die sich bei der Thermolyse der Gummiabfälle bilden. Im vorliegenden Fall ist diese Temperatur T = 500°C. Im entgegengesetzten Fall wird ein Teil der Dämpfe der Kohlenwasserstoffe bei einer Temperaturabnahme im Fliehkraftabscheider 25 verflüssigt und am Filterelement 26 abgesetzt. Das Filterelement wird in diesem Fall ausfallen.

Die Temperatur im Fliehkraftabscheider 25 wird nach den Angaben des Temperatursensors 27 kontrolliert und mit einem Wert T = 500°C aufrechterhalten, indem der Verbrauch der Verbrennungsprodukte anhand des Hahns 23 so geregelt wird, dass ein Teil der Verbrennungsprodukte bei einer Temperaturerhöhung im Fliehkraftabscheider in den Heizkörper 28 unter Umgehung des Fliehkraft-abscheiders geleitet wird.

Im vorliegenden Fall beträgt dieser Teil 900 kg/h. Die Verbrennungsprodukte werden über den Filtermantel 24 des Fliehkraftabscheiders 25 mit einem Durchsatz von 2.400 - 900 kg/h = 1.500 kg/h in den Heizkörper 28 geleitet und bis zu einer Temperatur von 250°C gekühlt. Dies erfolgt, indem die Luft durch die Heizkammer 29 mit einem Ventilator 30 geblasen wird. Dabei lässt man durch den Heizkörper auch 900 kg/h Verbrennungsprodukte durchströmen, die den Filtermantel 24 nicht passiert haben. In diesem Fall wird die zu erwärmende Luftmenge betragen:

$$M_L = GV_p \times C_{Vp} \times (T_{EVp} - T_{AVp})/C_L \times (T_A - E) = 2.400 \text{ kg} \times 1,2 \text{ kJ/kg°C} \times (500°C - 300°C)/3.600 \text{ s} \times 1,2 \text{ kJ/kg°C} \times (220°C - 20°C) = 0,67 \text{ kg/s, (6)}$$

wobei:

$M_L$ die Menge der zu erwärmenden Luft in kg/s,
$G_{Vp}$ der Durchsatz der Verbrennungsprodukte, 2.400 kg/h,
$C_{Vp}$ die spezifische Wärmekapazität der Verbrennungsprodukte, 1,2 kJ/kg°C,
$C_L$ die spezifische Wärmekapazität von Luft, 1,2 kJ/kg°C,
$T_{EVp}$ die Temperatur der Verbrennungsprodukte am Eintritt in den Heizkörper, 500°C,
$T_{AVp}$ die Temperatur der Verbrennungsprodukte am Austritt aus dem Heizkörper, 250°C,
$T_A$ die Lufttemperatur am Austritt aus dem Heizkörper, 220°C,
$T_E$ die Lufttemperatur am Eintritt in den Heizkörper, 20°C, ist.

Diese Luftmenge reicht für eine vollständige Verbrennung von flüssigem Kraftstoff mit einem Verbrauch von 120 kg/h in zwei zylinderförmigen Brennkammern aus. Die Abkühltemperatur der Verbrennungsprodukte wird dabei anhand von den Angaben des Temperatursensors 31 kontrolliert. Die gekühlten Verbrennungsprodukte werden aus dem Heizkörper 28 mittels des Saugzugs 32 mit einem Durchsatz von 2.400 kg/h in den Schornstein 33 abgeleitet. Die im Heizkörper erhitzte Luft wird mit dem Ventilator 30 mit einem Durchsatz von 0,335 kg/s über den Zugschieber 34 in ein Heizrohr 18 und mit einem Durchsatz von 0,335 kg/s in das andere Heizrohr geführt.

Dies ermöglicht es, die Wärme der Verbrennungsprodukte nützlich zu verwenden, wobei die Verbrennungsprodukte aus dem Filtermantel 24 bei einer hohen Temperatur (500°C) austreten. Dabei wird der Kraftstoffverbrauch durch eine vollständige Ausnutzung der Wärme der Verbrennungsprodukte reduziert, und die Emission thermischer Energie wird vermieden, d. h. die Energieeffizienz des Verfahrens zur Verwertung der Gummiabfälle wird erhöht.

Unmittelbar in den Reaktor 6 wird mit dem überhitzten Wasserdampf im Bereich der Beschickung mit Ausgangsgummiabfällen Wärme eingeführt. Die Ausgangsabfälle haben eine Temperatur, die annähernd gleich der Umgebungstemperatur ist. (Die dem Reaktor zugeführten Abfälle sind noch nicht durchgewärmt.)

Die Zuführung des überhitzten Wasserdampfs in diesem Bereich (des Reaktors) stellt eine große Temperaturdifferenz zwischen dem bis zu 500°C überhitzten Wasserdampf und den kalten Abfällen mit einer Temperatur von ca. 20°C sicher. Durch diese große Temperaturdifferenz lassen sich hohe Wärmeströme des Wasserdampfs zu den Abfällen mittels einer Konvektionsübertragung thermischer Energie bilden. Infolgedessen wird die Erwärmung der Abfälle beschleunigt, und die Verwertungszeit wird reduziert.

Die Gummi-Abfälle werden im Reaktor 6 gefördert und durch den Kontakt mit den heißen Reaktorwänden erwärmt. Außerdem erfolgt die genannte Erwärmung durch den Konvektionswärmeaustausch mit dem Wasserdampf, der dem Reaktor zugeführt wird, oder auch durch Strahlung der Heizrohre und den Konvektionswärmeaustausch mit den Heizrohroberflächen.

Bei der Erwärmung der Gummiabfälle im Reaktor 6 bis zu einer Temperatur von 400°C beginnt die Thermolyse der Gummiabfälle und verläuft mit der Freisetzung von gasförmigen Produkten und festem Kohlenstoffrückstand. Im vorliegenden Fall werden bei der Verwertung von 1.500 kg/h Gummiabfällen 45 Gew.-% der Dämpfe von Kohlenwasserstoffen und 55 Gew.-% von festem Rückstand gebildet. Die Temperatur im Reaktor 6 wird dabei nach den Angaben des Temperatursensors 35 kontrolliert und durch Änderung der Kraftstoffmenge geregelt, die in den Brennern 13 verbrannt wird.

Gasförmige Zersetzungsprodukte der Abfälle mit einem Durchsatz von 675 kg/h vermischen sich mit dem Wasserdampf. (Der Wasserdampf wird dem Reaktor mit einem Durchsatz von 150 kg/h zugeführt.) Infolgedessen wird im Reaktor 6 ein Gas-Dampf-Gemisch in einer Menge von 675 kg/h + 150 kg/h = 825 kg/h gebildet, und der Druck im Reaktor steigt und wird höher als der Atmosphärendruck. Um dabei den Austritt von Gas-Dampf-Produkten aus dem Reaktor 6 an die Umgebung(sluft) auszuschließen und die Drehung der Schnecken 10 sicherzustellen, sind im jeweiligen Abschnitt des Reaktors die Hochtemperaturpackungen 36 angeordnet.

Die Gas-Dampf-Produkte, die durch die Thermolyse der Gummiabfälle gebildet wurden, sind in Kontakt mit den Heizrohroberflächen mit einer hohen Temperatur. Infolgedessen verläuft eine thermische Zersetzung hochmolekularer Kohlenwasserstoffe, wobei sich Kohlenwasserstoffe mit einer niedrigeren Molekülmasse und Ruß bilden. Der Ruß setzt sich auf den Heizrohroberflächen in Form einer Schicht ab. Im vorliegenden Fall werden 25 Gew.-% Ruß von der Menge der Dämpfe der Kohlenwasserstoffe gebildet, d. h. 625 kg/h x 0,25 = 169 kg/h. Diese Rußschicht muss permanent von den Heizrohroberflächen abgetragen werden. Dadurch kann die Wärmeübertragung von den Heizrohren zu den Abfällen im Reaktor aufrechterhalten werden. Die Rußschicht auf den Oberflächen bildet einen Wärmewiderstand. Der Wärmestrom durch diese Schicht verringert sich. Dadurch strömt in den Reaktor weniger thermische Energie ein, und die Heizrohre werden wegen einer niedrigen Wärmeabführung bis zu einer hohen Temperatur überhitzt. Infolge der Überhitzung brennen die Heizrohre durch, was einen Notfall, nämlich eine Zerstörung des Reaktors, verursachen kann.

Der Ruß der Heizrohroberflächen wird mit den Kratzern 37 abgetragen. Bei der Schneckendrehung gleiten die Kratzer an den Seitenflächen der Heizrohre 18 entlang und tragen die Rußschicht ab. Der entfernte Ruß fällt dann unter dem Einfluss seines eigenen Gewichts in einer Menge von 169 kg/h auf die Schicht der Gummiabfälle ab, die mit den Schnecken 10 befördert werden.

Dieser Ruß hat sich durch thermische Zersetzung der Dämpfe der Kohlenwasserstoffe gebildet. Aus diesem Grund enthält er praktisch keine Asche, während der feste Kohlenstoffrückstand der Thermolyse der Gummi-Abfälle 12 Gew.-% Asche (nichtorganische Einschlüsse in Form von Zink-, Eisen-, Silicium-, Calciumoxide u.a.) enthält. Bei der Vermengung von 169 kg Ruß ohne Asche und 825 kg - 100 kg = 725 kg von festem Kohlerückstand kann deshalb fester Kohlenstoffrückstand mit folgendem Aschegehalt gewonnen werden:

$$A = (M_{fRs} \times C_{fRs} + M_R \times C_R)/(M_{Rs} + M_R) = (725 \text{ kg} \times 0,12 + 169 \text{ kg} \times 0,0)/(725 \text{ kg} + 169 \text{ kg}) = 0,097 \text{ oder } 9,7 \text{ Gew.-\%}, (6)$$

wobei:

A der Aschegehalt,
$M_{fRs}$ die Masse von festem Rückstand, 725 kg,
$C_{fRs}$ der Aschegehalt in festem Rückstand, 0,12,
$M_R$ die Rußmasse, 169 kg,
$C_R$ der Aschegehalt im Ruß, 0,0 ist.

Es wird davon ausgegangen, dass feste Produkte 100 kg Drahtlitze enthalten. Somit verringert sich der Aschegehalt in festen Zersetzungsprodukten der Gummiabfälle von 12 Gew.-% bis auf 9,7 Gew.-%, und die Qualität dieser Produkte verbessert sich.

Infolge der thermischen Zersetzung hochmolekularer Kohlenwasserstoffe wird im Gas-Dampf-Gemisch der Gehalt an wertvollen niedermolekularen Kohlenwasserstoffen erhöht. Außerdem wird der Gehalt an Teerverbindungen reduziert. Gleichzeitig reagiert der Wasserdampf mit dem Kohlenstoff, wobei sich Wasserstoff, Kohlenstoffoxid und -dioxid bilden.

$$H_2O + C = H_2 + C_0 \quad (7)$$

Aus (7) geht hervor, dass infolge der Reaktion des Wasserdampfs mit dem Kohlenstoff pro 18 kg Wasserdampf 12 kg Kohlenstoff verbraucht werden. Im vorliegenden Fall werden 24 kg Kohlenstoff und 36 kg Wasserdampf verbraucht. Dabei bilden sich 4 kg Wasserstoff und 56 kg Kohlenstoffoxid.

Bei der Einbringung von Wasserstoff in den Reaktor 6 kommt es zum Hydrieren ungesättigter Kohlenwasserstoffe, die im Gas-Dampf-Gemisch enthalten sind. Dadurch bilden sich wertvolle gesättigte Kohlenwasserstoffe, d. h. die Qualität von Produkten der Thermolyse von Gummiabfällen erhöht sich.

Die Gas-Dampf-Produkte aus dem jeweiligen Abschnitt des Reaktors werden durch die perforierten Rohre 38 mit Hilfe des Hahns 39 mit einem Durchsatz von 625 kg/h - 169 kg/h = 456 kg/h (wobei 169 kg/h die sich gebildete Rußmenge ausmacht) aus dem Reaktor 6 in den Fliehkraftabscheider 25 abgeleitet.

Infolge der Beförderung der Abfälle im Reaktor erfolgt unter der Wirkung der Schnecken die Zerkleinerung von festem Kohlerückstand, wobei sich Kohlenstoff-Feinstaub bildet. Dieser Kohlenstoff-Feinstaub tritt in den Reaktor aus.

Die Ableitung des Gas-Dampf-Gemisches aus dem Reaktor, ohne dass das Gas-Dampf-Gemisch vom Feinstaub gereinigt wird, führt zum Austrag des Kohlenstoff-Feinstaubs in die Rohrleitungen und das Kondensationssystem.

Aufgrund dessen werden die Rohrleitungen und das Kondensationssystem mit diesem Feinstaub verstopft. Der Querschnitt der Rohrleitungen verringert sich und der Druck im Reaktor steigt. Das Verstopfen des Kondensationssystems mit dem Kohlenstoff-Feinstaub führt die Reduzierung der Wärmeübertragung (die Feinstaub-Schicht auf der Oberfläche des Kondensationssystems tritt als Wärmedämmung auf) sowie den Ausfall des Systems herbei.

Die Zuführung des Gas-Dampf-Gemisches in den Fliehkraftabscheider 25 ermöglicht es, den Kohlenstoff-Feinstaubaustrag aus dem Reaktor zu reduzieren. Dies kommt zustande, weil das Gas-Dampf-Gemisch das Filterelement 26 in Form eines Sacks aus Hochtemperatur-Kohlenstofffasergewebe durchströmt. Das Hochtemperatur-Kohlenstofffasergewebe ist mit einer Rüttelvorrichtung versehen. Die Staubteilchen setzen sich auf der Oberfläche des Filterlements ab und werden mit der Rüttelvorrichtung 40 in den unteren Teil des Fliehkraftabscheiders 25 abgeschüttelt. Aus dem unteren Teil des Fliehkraftabscheiders 25 werden sie in den Speicher 41 entladen. Dieser Kohlenstoff stellt ein hochwertiges Produkt dar, das nach seinen Parametern dem Industrieruß mit einem niedrigen Aschegehalt ähnlich ist.

Im vorliegenden Fall ist die Menge des aus dem Reaktor ausgetragenen Kohlenstoff-Feinstaubs gleich 5 Gew.-% der Menge des sich bildenden festen Rückstands, d. h. 725 kg/h x 0,04 = 29 kg/h. Dieser Kohlenstoff-Feinstaub wird vom Fliehkraftabscheider aufgefangen und mit einem Verbrauch von 29 kg/h in den Speicher 41 abgeleitet. Der den Fliehkraftabscheider 25 durchströmte Gas-Dampf-Gemischstrom wird mit Hilfe des Kompressors 42 mit einem Durchsatz von 456 kg/h + 4 kg/h = 460 kg/h dem Kondensator 43 zugeführt. Im Kondensator wird der Gas-Dampf-Gemischstrom infolge des Wärmeaustausches mit dem Kühlwasser, das durch das Kondensatorgehäuse vom Kühlturm 44 gepumpt wird, bis zu einer Wasserdampf-Kondensationstemperatur von T = 100°C gekühlt. Dies wird anhand der Angaben des Temperatursensors 45 kontrolliert. 4 kg/h-Zunahme der Gas-Dampf-Gemischmenge ist durch die Reaktion zwischen Wasserstoff ($H_2$) und Kohlenwasserstoffen beim Hydrieren bedingt.

Durch die Abkühlung der Gas-Dampf-Produkte wird der Wasserdampf in einer Menge von 150 kg/h - 36 kg/h = 114 kg/h verflüssigt. Dies geschieht, weil 36 kg/h Wasserdampf für die Reaktion mit dem Kohlenstoff verbraucht wurden, wobei sich brennbare Gase gebildet haben (Wasserstoff und Kohlenstoffoxid).

Ein Teil der Dämpfe der Kohlenwasserstoffe in einer Menge von 360 kg/h wird verflüssigt, wobei sich das Kondensat bildet. Infolgedessen wird ein Gemisch aus Wasser und flüssigen Kohlenwasserstoffen in einer Menge von 114 kg/h + 360 kg/h = 474 kg/h gebildet. Dieses Kondensat aus dem Kondensator 43 wird mit einem Verbrauch von 474 kg/h dem Scheider 46 zugeführt, wobei flüssige Kohlenwasserstoffe vom Wasser getrennt werden. Das Wasser aus dem Scheider 46 wird mit einem Durchfluss von 114 kg/h dem Speicher 47 zugeführt. Aus dem Speicher 47 wird das Wasser durch den Wasserfilter 48 und über den Hahn 49 in den Verdampfer 15 zur Arbeitswasserdampferzeugung zurückgeführt.

Flüssige Kohlenwasserstoffe aus dem Scheider 46 werden mit einem Durchfluss von 360 kg/h dem Speicher 50 zugeführt. Aus dem Speicher 50 werden flüssige Kohlenwasserstoffe in einer Menge von 42 kg/h über den Hahn 51 den zylinderförmigen Brennkammern 14 (je 30 kg/h pro Brennkammer) zugeleitet und verbrannt. Die Energie wird zur Arbeitswasserdampferzeugung und der Erwärmung des Reaktors 6 verwendet.

Fester Kohlenstoffrückstand wird durch den Austritt 52 mit Hilfe der rotierenden Kühl- und Dosiervorrichtung 53 mit einem Verbrauch von 825 kg/h + 169 kg/h - 24 kg/h - 29 kg/h - 941 kg/h aus dem Reaktor 6 abgeführt und dem Magnetscheider 54 zugeführt. Dabei sind 169 kg/h die sich aus den Dämpfen von Kohlenwasserstoffen gebildete Rußmenge. 24 kg/h Kohlenstoff wurden infolge der Reaktion des Wasserdampfs mit dem Kohlenstoff verbraucht, und 29 kg/h Kohlenstoff-Feinstaub wurden aus dem Reaktor 6 in den Fliehkraftabscheider 25 ausgetragen.

Im Magnetscheider 54 werden magnetische Einschlüsse (Partikel von Drahtlitzen) in einer Menge von 100 kg/h getrennt und in den Speicher 55 entladen. Aus dem Magnetscheider 54 wird der von metallischen Einschlüssen gereinigte feste Kohlenstoffrückstand mit einem Verbrauch von 941 kg/h - 100 kg/h = 841 kg/h dem elektrostatischen Scheider 56 zugeführt. Hier wird ein Teil des Rußes getrennt (nichtorganische Einschlüsse: Zink-, Silicium-, Eisen-, Calciumoxide u. a.) in einer Menge von 5 Gew.-%, d. h. 841 kg/h x 0,05 = 42 kg/h.

Der Strom des von metallischen Einschlüssen gereinigten festen Kohlenstoffrückstands wird aus dem elektrostatischen Scheider 56 mit einem Verbrauch von 841 kg/h - 42 = 799 kg/h in den Speicher 57 abgeführt. Nichtorganische Einschlüsse in einer Menge von 42 kg/h werden in den Speicher 58 abgeführt. Diese nichtorganischen Einschlüsse enthalten einen großen Anteil an Zinkoxid (je nach Typ der Gummiabfälle von 20 bis 40 Gew.-%). Deshalb stellen sie einen hochwertigen Rohstoff zur Gewinnung von Zinkoxid dar. Der Gehalt an Zinkoxid in diesen Einschlüssen übertrifft dessen Gehalt an Konzentraten zur Gewinnung von Zinkoxid um das Mehrfache.

Somit verringert sich der Aschegehalt in festem Kohlenstoffrückstand bis 9,7 Gew.-% - 5,0 Gew.-% = 4,7 Gew.-%. Dies führt zur Erhöhung der Qualität von festen Produkten gegenüber den festen Produkten der Thermolyse von Gummiabfällen nach den bekannten Verfahren. Gemäß den bekannten Verfahren beträgt der Aschegehalt 12 bis 14 Gew.-%.

Die nicht kondensierten Dämpfe der Kohlenwasserstoffe werden aus dem Kondensator 43 über den Hahn 59 mit einem Durchsatz von 100 kg/h + 56 kg/h = 156 kg/h den Heizrohren 18 zugeführt (je 78 kg/h pro Heizrohr). Mit Hilfe der am jeweiligen Heizrohr angeordneten Zugschieber 34 werden gleichzeitig mit der Zufuhr nicht kondensierter Gase, ausgehend vom Heizkörper 28, 10 kg Luft pro 1 kg nicht kondensierter Dämpfe zugeleitet, d. h. die Luftzufuhr erfolgt mit einem Durchsatz von 1.560 kg/h (je 780 kg/h pro Heizrohr). Die Luftmenge wird dabei durch den Öffnungsgrad des jeweiligen Zugschiebers geregelt. Die Luft wird den Heizrohren über die Zugschieber 34 anhand des Ventilators 30 zugeführt. Dabei macht 56 kg/h Kohlenstoffoxid (CO) aus, das sich bei der Reaktion von Wasserdampf mit dem Kohlenstoff gebildet hat. Der gesamte Wasserstoff wurde für das Hydrieren verbraucht.

Infolge der Vermengung von Luft und nicht kondensierter Dämpfe der Kohlenwasserstoffe bildet sich ein Brennstoff-Luft-Gemisch. Dieses Gemisch wird unter der Wirkung der Brennerflamme entzündet und verbrannt. Die Verbrennung der nicht kondensierten Dämpfe der Kohlenwasserstoffe in einer Menge von 156 kg/h entspricht der Verbrennung von 78 kg/h von flüssigem Kraftstoff mit einem spezifischen Wärmewert von 40.000 kJ/kg und ermöglicht es, zusätzliche Energie zur Reaktorerwärmung zu gewinnen und den Verbrauch von Kraftstoff, der den Brennern zugeführt wird, von 120 kg/h bis auf 42 kg/h zu reduzieren. Dadurch können die Energieeffizienz des Verwertungsverfahrens erhöht und die Emission nicht kondensierter Gase ausgeschlossen werden.

Gewerbliche Anwendbarkeit

Die vorliegende Vorrichtung gemäß der Erfindung zur Verwertung von Gummi-abfällen unterscheidet sich von den bekannten Anlagen durch ihre verbesserten Parameter in Bezug auf den Energieaufwand, die Emissionen sowie die Qualität der zu gewinnenden Produkte.

**Patentansprüche**

1.   Vorrichtung zur Verwertung von Gummiabfällen mit einem Reaktor mit einer Schnecke, der sich in einer Wärmekammer befindet, einer Einheit zur thermischen Zersetzung, einem Brenner, einem Kondensator, einem Fliehkraftabscheider (Zyklonfilter), Vorrichtungen für die Entladung von festem Rückstand und für die Abführung des Gas-Dampf-Gemisches,
    **gekennzeichnet durch** das Zusammenwirken folgender Merkmale:

    - der Reaktor ist in Form von zwei gleichen Abschnitten ausgeführt, die horizontal angeordnet und an ihren Seitenflächen miteinander parallel verbunden sind,
    - die Einheit für die thermische Zersetzung ist in Form von Schnecken ausgebildet, wobei entlang der jeweiligen Schneckenachse Heizrohre angeordnet sind, die im jeweiligen Abschnitt des Reaktors eingebaut sind,
    - der jeweiligen Schnecke entlang sind Platten angeordnet, wobei sich diese Platten parallel in den Ecken eines gleichseitigen Dreiecks in Kontakt mit der Seitenfläche des Heizrohrs und senkrecht dazu befinden,
    - innerhalb des jeweiligen Heizrohrs ist eine Rohrschlange eingebaut,
    - an eine Stirnfläche des jeweiligen Rohrs ist unmittelbar eine zylinderförmige Brennkammer angeschlossen, die mit einem Verdampfer und einem Brenner versehen ist,
    - der Brenner ist an der Stirnfläche der Brennkammer tangential zur Seitenfläche der Brennkammer und senkrecht zur Brennkammerachse angebracht,
    - der Austritt des Kondensators ist an einen Scheider (Separator) angeschlossen, der Kohlenwasserstoffe und Wasser in der flüssigen Fraktion trennt,
    - der Eintritt der jeweiligen Rohrschlange ist an den Verdampferaustritt angeschlossen,
    - der Verdampfereintritt ist an den Wasseraustritt des Scheiders angeschlossen,
    - der Austritt der jeweiligen Rohrschlange ist mit dem Reaktor verbunden,
    - die andere Stirnfläche des jeweiligen Heizrohrs ist an den Einlass der Wärmekammer angeschlossen,
    - die Vorrichtung für die Abführung des Gas-Dampf-Gemisches ist als zwei perforierte, am Eintritt verschlossene Rohre ausgeführt,
    - diese Rohre sind im oberen Teil des Reaktors eingebaut, je eins im jeweiligen Abschnitt des Reaktors,
    - der Fliehkraftabscheider weist eine Mantelheizung auf,
    - der Eintritt der Mantelheizung ist an den Auslass der Wärmekammer angeschlossen,
    - der Austritt der Mantelheizung ist an den Eingang eines Heizkörpers angeschlossen,
    - der Ausgang des Heizkörpers ist mit einem Schornstein verbunden,
    - der Heizkammereingang des Heizkörpers ist mit der Umgebungsluft verbunden,
    - der Heizkammerausgang des Heizkörpers ist an ein Heizrohr angeschlossen,
    - die Austritte von perforierten Rohren sind mit dem Eintritt des Fliehkraftabscheiders verbunden,
    - der Fliehkraftabscheider weist ein Filterelement in Form eines Sacks aus Hochtemperatur-Kohlenstofffasergewebe auf, das mit einer Rüttelvorrichtung versehen ist,

- der Austritt des Fliehkraftabscheiders ist mit dem Eintritt des Kondensators verbunden,
- der Gasaustritt des Kondensators ist an Heizrohre angeschlossen,
- die Vorrichtung für die Entladung von festem Rückstand ist an den Eingang eines Magnetscheiders angeschlossen und
- der Ausgang des Magnetscheiders ist mit einem elektrostatischen Scheider verbunden.

## Claims

1.  An apparatus for reclamation of rubber scraps, having a reactor that has a screw and is located in a heating chamber, and having a unit for thermal decomposition, a pre-combustion chamber, a condenser, a centrifugal separator (cyclone filter), and devices for unloading solid residue and for carrying the gas-steam mixture away, **characterized by** the interaction of the following features:

    - the reactor is embodied in the form of two identical sections, which are located horizontally and communicate with to one another parallel on their side faces;
    - the unit for the thermal decomposition is embodied in the form of screws, and heating pipes are located along the axis of each of the screws, which pipes are built into the respective section of the reactor;
    - plates are located along each of the screws, and these plates are are placed parallel in the corners of an equilateral triangle in contact with the side face of the heating pipe and vertically thereto;
    - a pipe coil is built in, inside each respective heating pipe;
    - a cylindrical combustion chamber is attached to one face end of each pipe, which combustion chamber is provided with a vaporizer and a pre-combustion chamber;
    - the pre-combustion chamber is mounted on the face end of the combustion chamber tangentially to the side face of the combustion chamber and perpendicular to the combustion chamber axis;
    - the outlet of the condenser is attached to a separator which separates hydrocarbons and water in the liquid fraction;
    - the inlet of the respective pipe coil is attached to the vaporizer outlet;
    - the vaporizer inlet is attached to the water outlet of the separator;
    - the outlet of the respective pipe coil communicates with the reactor;
    - the other face end of the respective heating pipe is attached to the intake of the heating chamber;
    - the device for carrying away the gas-steam mixture is embodied as two perforated pipes that are closed at the inlet;
    - these pipes are built into the upper part of the reactor, one each in the respective section of the reactor;
    - the centrifugal separator has a jacket heater;
    - the inlet of the jacket heater is attached to the discharge unit of the heating chamber;
    - the outlet of the jacket heater is attached to the input of a heating element;
    - the output of the heating element communicates with a chimney;
    - the calandria input of the heating element communicates with the ambient air;
    - the calandria output of the heating element is attached to a heating pipe;
    - the outlets of perforated pipes communicate with the inlet of the centrifugal separator;
    - the centrifugal separator has a filter element in the form of a bag made of high-temperature carbon-fiber fabric, which is provided with a shaker device;
    - the outlet of the centrifugal separator communicates with the inlet of the condenser;
    - the gas outlet of the condenser is attached to heating pipes;
    - the device for unloading solid residue is attached to the input of a magnetic separator; and
    - the output of the magnetic separator communicates with an electrostatic separator.

## Revendications

1.  Dispositif pour la valorisation de déchets en caoutchouc avec un réacteur avec un vis sans fin se trouvant dans une chambre thermique, une unité de destruction thermique, un brûleur, un condensateur, un séparateur de force centrifuge (filtre cyclonique), des dispositifs pour la décharge du résidu solide et pour l'évacuation de la composition gaz-vapeur est **caractérisé par** l'interaction des éléments suivants :

    - le réacteur est réalisé sous forme de deux mêmes sections disposées à titre horizontale et reliées entre elles au niveau de leurs surfaces latérales à titre parallèle,

- l'unité pour la destruction thermique est réalisée sous forme de vis sans fin où des tubes de chauffage sont disposés au long de l'axe de vis respectif qui sont intégrés au niveau de la section respective du réacteur,
- des plaques sont disposées au long du vis sans fin respectif où ces plaques se situent à titre parallèle au niveau des coins d'un triangle équilatéral en contact avec la surface latérale du tube de chauffage et à titre perpendiculaire,
- un serpentin est intégré à l'intérieur du tube de chauffage respectif,
- une chambre de combustion cylindrique est reliée directement à la face frontale du tube respectif et est munie d'un évaporateur et d'un brûleur,
- le brûleur est installé au niveau de la face frontale de la chambre de combustion tangentiellement à la face latérale de la chambre de combustion et perpendiculairement à l'axe de la chambre de combustion,
- la sortie du condensateur est reliée à un séparateur (séparateur) séparant les hydrocarbures et l'eau au niveau de la fraction liquide,
- l'entrée du serpentin respectif est reliée à la sortie de l'évaporateur,
- l'entrée de l'évaporateur est reliée à la sortie de l'eau du séparateur,
- la sortie du serpentin respectif est reliée au réacteur,
- l'autre face frontale du tube de chauffage respectif est reliée à l'entrée de la chambre de combustion,
- le dispositif pour l'évacuation de la composition gaz-vapeur est réalisé en qualité de deux tubes perforés fermés à l'entrée,
- ces deux tubes sont intégrés dans la partie supérieure du réacteur soit un dans la section respective du réacteur,
- le séparateur de force centrifuge présente une conduite sous gaine,
- l'entrée de la conduite sous gaine est reliée à la sortie de la chambre de combustion,
- la sortie de la conduite sous gaine est reliée à l'entrée d'un corps de chauffe,
- la sortie du corps de chauffe est reliée à une cheminée,
- l'entrée de la chambre de chauffe du corps de chauffe est reliée à l'air ambiant,
- la sortie de la chambre de chauffe du corps de chauffe est reliée à un tube de chauffage,
- les sorties des tubes perforés sont reliées à l'entrée du séparateur de force centrifuge,
- le séparateur de force centrifuge présente un élément de filtrage sous forme de sacs de tissu des fibres de carbone à haute température muni d'un appareil de battage,
- la sortie du séparateur de force centrifuge est reliée à l'entrée du condensateur,
- la sortie du gaz du condensateur est reliée au tube de chauffage,
- le dispositif pour la décharge due résidu solide est relié à l'entrée d'un séparateur magnétique,
- la sortie du séparateur magnétique est reliée à un séparateur électrostatique.

Fig. 1

Fig. 2

Fig. 3

**IN DER BESCHREIBUNG AUFGEFÜHRTE DOKUMENTE**

**In der Beschreibung aufgeführte Patentdokumente**

- RU 2460743
- RU 2441053
- BY 13279
- RU 2459843

**In der Beschreibung aufgeführte Nicht-Patentliteratur**

- **W.P. ISSATSCHENKO ; W.A. OSSIPOWA ; A.S. SUKOMEL.** Teploperedatscha (Wärmeübertragung): Ein Lehrbuch für Hochschulen. 1981, 406